# EUROPÄISCHE PATENTSCHRIFT

(11) **EP 3 094 937 B1**
(45) Veröffentlichungstag und Bekanntmachung des Hinweises auf die Patenterteilung: **23.05.2018**
(21) Anmeldenummer: 15701293.1
(22) Anmeldetag: 16.01.2015
(51) Int. Cl.: F28D 1/02, F28D 1/047, F28D 3/02, F28F 1/00, F28F 9/26, E03C 1/00, F28D 7/08

(54) **WÄRMETAUSCHER FÜR EINE DUSCHE ODER BADEWANNE**
HEAT EXCHANGER FOR SHOWER OR BATHTUB
ÉCHANGEUR DE CHALEUR POUR DOUCHE OU BAIGNOIRE

(30) Priorität: 17.01.2014 CH 67142014; 25.08.2014 CH 12662014
(43) Veröffentlichungstag der Anmeldung: 23.11.2016
(73) Patentinhaber: Joulia AG, 2503 Biel (CH)
(72) Erfinder: SCHMID, Reto, CH-3073 Gümligen (CH); SVATON, Roman, 2502 Biel (CH); RUSCH, Christoph, Ch-3027 Grossaffoltern (CH)
(74) Vertreter: Frei Patent Attorneys
(86) Internationale Anmeldenummer: PCT/CH2015/000003
(87) Internationale Veröffentlichungsnummer: WO 2015/106362

(56) Entgegenhaltungen:
- EP-A1- 2 453 194
- EP-A2- 1 457 608
- AT-B- 395 654
- DE-A1-102006 050 922
- NL-C1- 1 020 068
- US-A1- 2003 024 692
- US-A1- 2005 173 102
- US-A1- 2010 270 009
- US-A1- 2010 282 343
- US-A1- 2011 226 341

## Beschreibung

Die Erfindung bezieht sich auf das Gebiet der Wärmetauscher und insbesondere auf einen Wärmetauscher für eine Dusche oder eine Badewanne gemäss dem Oberbegriff des Patentanspruches 1.

EP 2273223 A1 zeigt einen Wärmetauscher, der als Ablauf einer Duschwanne montiert wird und langgestreckt entlang einer Seite der Duschwanne angeordnet ist. Ablaufendes Wasser strömt durch einen Siphon und dann im Wesentlichen senkrecht nach unten entlang einer ebenen Platte eines Wärmetauschers. Leitungen für Frischwasser sind mit dieser Platte verbunden, beispielsweise mit Stegen, um einen Zwischenraum zu schaffen, in welchen im Falle eines Lecks Abwasser oder Frischwasser fliesst und dadurch das Leck detektierbar ist. Die Stege haben eine Breite von maximal 2 Millimetern. Abfliessendes Wasser strömt zuerst durch einen langgestreckten Siphon und dann über ein Verteilblech, welches das Wasser entlang des Wärmetauschers verteilt. Der Siphon ist in einem Zwischenraum zwischen zwei Wärmetauschern angeordnet. Das Verteilblech kann einstückig mit einer Wand des Siphons ausgebildet sein.

EP 2453194 A1 offenbart einen Wärmetauscher für einen Ablauf einer Duschwanne gemäß Oberbegriff des Anspruchs 1, bei welchem das ablaufende Wasser über langgestreckte Windungen eines Rohres mit Frischwasser geführt wird. Von oben gesehen liegen die Windungen auf Schlaufen mit geraden Abschnitten, die von halbkreisförmigen Abschnitten verbunden sind. Abfliessendes Wasser strömt zuerst durch einen langgestreckten Siphon und dann über ein Lochblech, welches das Wasser oberhalb der Windungen über diese verteilt. Der Siphon ist in einem Zwischenraum zwischen den Windungen angeordnet. Das Verteilblech ist einstückig mit einer Wand des Siphons ausgebildet. FR 2868796 A1 zeigt einen Wärmetauscher mit einem Siphon, welcher in der Mitte eines spiralförmig verlaufenden Wärmetauscherrohres angeordnet ist. In einer anderen Ausführungsform ist der Wärmetauscher selber in einem als Siphon wirkenden Behälter angeordnet. In beiden Ausführungsformen liegt das Wärmetauscherrohr im abfliessenden Wasser.

Bestehende Wärmetauscher sind schwer zu reinigen und zu entkalken und/oder schwierig zu kontrollieren und zu warten, und/oder sind bezüglich ihres Wirkungsgrades noch verbesserbar.

Es ist deshalb Aufgabe der Erfindung, einen Wärmetauscher zu schaffen, welcher einen verbesserten Wirkungsgrad aufweist. Gelöst wird diese Aufgabe durch den Gegenstand des Anspruchs 1. Eine weitere mögliche Aufgabe der Erfindung ist, einen Wärmetauscher zu schaffen, welcher einfach zu kontrollieren, zu warten und/oder zu reinigen oder zu entkalken ist.

Eine weitere mögliche Aufgabe der Erfindung ist, einen Wärmetauscher zu schaffen, welcher einfach zu montieren ist und/oder in vielfältiger Weise eingesetzt werden kann.

Eine weitere mögliche Aufgabe der Erfindung ist, einen Wärmetauscher zu schaffen, welcher eine hohe Sicherheit bezüglich Lecken und Gebäudeschäden durch Lecken aufweist.

Eine weitere mögliche Aufgabe der Erfindung ist, einen Wärmetauscher zu schaffen, welcher eine geringe Bauhöhe aufweist.

Eine weitere mögliche Aufgabe der Erfindung ist, einen Wärmetauscher zu schaffen, der einen hygienischen Betrieb einer Dusche unterstützt.

Gemäss einem **ersten Aspekt der Erfindung**, der unabhängig von den anderen Aspekten realisiert werden kann, liegt ein Wärmetauscher mit niedriger Bauhöhe und dennoch gutem Wirkungsgrad vor, mit den folgenden Eigenschaften:
Wärmetauscher zum Aufwärmen von Frischwasser mittels Wärme von Abwasser bei einer Dusche oder Badewanne, aufweisend eine Ablaufwanne, mindestens eine in der Ablaufwanne angeordnete und für den Anschluss in eine Frischwasserzuführung vorgesehene Wärmetauschereinheit, und ein Verteilelement, welches zum Verteilen von ablaufendem Abwasser über die mindestens eine Wärmetauschereinheit angeordnet ist. Dabei weist die mindestens eine Wärmetauschereinheit mehrere sequentiell aufeinander folgende (also nacheinander durchströmte) Rohrabschnitte auf, die durch durchströmte Umlenkabschnitte miteinander verbunden sind und bei einer Orientierung des Wärmetauschers wie im Betrieb des Wärmetauschers im Wesentlichen horizontal verlaufen. Dabei sind jeweils zwei horizontal verlaufende, aufeinanderfolgende, also nur durch einen Umlenkabschnitt miteinander verbundene, Rohrabschnitte übereinander angeordnet und werden nacheinander von herabtropfendem oder herablaufendem Abwasser beträufelt oder überströmt.

Mit anderen Worten: es führt ein erster Rohrabschnitt in eine erste Richtung, und es führt nach einem Umlenkabschnitt ein zweiter Rohrabschnitt unterhalb des ersten Rohrabschnittes in die entgegengesetzte Richtung. Es liegt somit, entlang der Wärmetauscherrohre (respektive entlang der Strömung durch die Rohre) gesehen zwischen dem ersten und dem zweiten Rohrabschnitt kein weiterer horizontal verlaufender Rohrabschnitt. In der Vertikalen (entlang der Strömung über die Rohre) gesehen, sind die beiden beschriebenen Rohrabschnitte in der Regel ebenfalls aufeinanderfolgend. Alternativ kann aber in der Vertikalen auch eine andere Folge realisiert werden, beispielsweise indem ein dritter Rohrabschnitt, welcher entlang der Rohre gesehen auf den zweiten Rohrabschnitt folgt, in vertikaler Richtung zwischen dem ersten und dem zweiten Rohrabschnitt angeordnet sein.

Indem die Rohre einer Wärmetauschereinheit übereinander angeordnet sind, werden sie nacheinander vom herabtropfenden oder herablaufenden Abwasser überströmt oder beträufelt (je nach Volumenstrom des Abwassers). Dies kann auch als fallender Film ("falling film") bezeichnet werden. Es findet jeweils zwischen zwei übereinander liegenden Rohrabschnitten eine Neuvermischung im Abwasser statt, wodurch die Wärmeabgabe an die Rohre verbessert wird.

Allgemein gilt: Angaben wie "horizontal" und "vertikal" beziehen sich auf die Orientierung des Wärmetauschers in einem eingebauten und betriebsfähigen Zustand. In diesem sind aufeinanderfolgende Rohrabschnitte einer Wärmetauschereinheit vertikal übereinander angeordnet und verlaufen die Rohrabschnitte zumindest annähernd horizontal.

Der Begriff "Wärmetauschereinheit" bezeichnet eine Folge von Frischwasser führenden Leitungen, welche von einer Frischwasserzufuhr zu einer Frischwasserwegführung des Wärmetauschers führt und von Frischwasser sequentiell durchströmt wird. Es können mehrere Wärmetauschereinheiten parallel geschaltet sein.

Gemäss einer Ausführungsform sind die Rohrabschnitte senkrecht übereinander angeordnet.

Gemäss einer Ausführungsform sind die Rohrabschnitte im Wesentlichen gerade.

Gemäss einer Ausführungsform verlaufen alle geraden Rohrabschnitte einer Wärmetauschereinheit in derselben vertikalen Ebene. Eine zweite Wärmetauschereinheit kann im Wesentlichen parallel dazu in einer anderen vertikalen Ebene angeordnet sein. Eine solche Anordnung ist zu unterscheiden von einer einzigen Wärmetauschereinheit, deren gerade Rohrabschnitte in zwei oder mehr vertikalen Ebenen verlaufen, beispielsweise mit Umlenkabschnitten, welche das Rohr respektive den Frischwasserfluss von der einen dieser beiden Ebenen zur anderen führen.

Es zeigt sich, dass mit einem derart gestalteten Wärmetauscher eine geringe Bauhöhe bei gleichwohl gutem Wirkungsgrad realisiert werden kann. Die Bauhöhe kann durch weitere Massnahmen klein gehalten werden, beispielsweise durch Kombination einer oder mehrerer der folgenden Massnahmen:
- Vertikal gestauchte Rohre, zumindest in den Rohrabschnitten.
- Durchführung von Zu- und Abführung des Frischwassers durch eine vertikale Seitenwand oder Wannenwand anstelle des Wannenbodens.
- Ablaufstutzen zur Kanalisation ebenfalls in einer vertikalen Seitenwand anstelle des Wannenbodens.
- Senkrecht nach unten aus dem Wannenboden und dann um einen Winkel von 90° führende Anschlussstutzen für Zu- und Abfuhr von Frischwasser.
- Anordnung dieser Anschlussstutzen neben einer Vertiefung im Wannenboden, wobei die Vertiefung zu einem Ablauf für das Abwasser zur Kanalisation führt.
- Ausführung eines (umlaufenden) Siphons als mehrstufigen Siphon.

In einer Ausführungsform des Wärmetauschers
- liegen Anschlussstellen für die mindestens eine Wärmetauschereinheit vor, welche es erlauben, die mindestens eine Wärmetauschereinheit zumindest teilweise aus der Ablaufwanne zu entfernen, und diese Anschlussstellen innerhalb der Ablaufwanne angeordnet sind, und/oder
- weist die mindestens eine Wärmetauschereinheit eine doppelte Trennung mit einem Zwischenraum zwischen Frischwasser und Abwasser auf, wobei der Zwischenraum sich vollständig innerhalb der Ablaufwanne befindet.

Solche Anschlussstellen und/oder eine doppelte Trennung in der Ablaufwanne lassen sich auch realisieren, wenn die Rohrabschnitte anders als oben beschrieben verlaufen.

Gemäss einem **zweiten Aspekt der Erfindung**, der unabhängig von den anderen Aspekten realisiert werden kann, liegt also ein Wärmetauscher mit hoher Sicherheit bezüglich Leckwasser vor, mit den folgenden Eigenschaften:
Wärmetauscher zum Aufwärmen von Frischwasser mittels Wärme von Abwasser bei einer Dusche oder Badewanne, aufweisend eine Ablaufwanne, mindestens eine in der Ablaufwanne angeordnete und für den Anschluss in eine Frischwasserzuführung vorgesehene Wärmetauschereinheit, und ein Verteilelement welches zum Verteilen von ablaufendem Abwasser über die mindestens eine Wärmetauschereinheit angeordnet ist, wobei
- Anschlussstellen für die mindestens eine Wärmetauschereinheit vorliegen, welche es erlauben, die mindestens eine Wärmetauschereinheit zumindest teilweise aus der Ablaufwanne zu entfernen, und diese Anschlussstellen innerhalb der Ablaufwanne angeordnet sind, und/oder
- die mindestens eine Wärmetauschereinheit eine doppelte Trennung mit einem Zwischenraum zwischen Frischwasser und Abwasser aufweist, wobei der Zwischenraum sich vollständig innerhalb der Ablaufwanne befindet.

Dies führt dazu, dass austretende Flüssigkeit von Lecks an den Anschlussstellen und/oder von Lecks, die den Zwischenraum füllen, in der Ablaufwanne aufgefangen wird. Durch die Ablaufwanne wird die Flüssigkeit in die Kanalisation geleitet. Es besteht keine Gefahr, dass bei Schäden an einer Wärmetauschereinheit Flüssigkeit den Wärmetauscher unkontrolliert verlässt und zu Bauschäden führt.

Als Schnittstellen zum Wärmetauscher werden Elemente mit Standard-Anschlüssen verwendet, die in die Ablaufwanne hinein resp. aus dieser heraus führen, typischerweise durch einen Wannenboden oder eine Wannenwand. Die Zuführung und Abführung von Frischwasser sowie die Abführung des Abwassers aus der Ablaufwanne können somit mit geprüften Standard-Sanitärbauteilen realisiert werden. Alle spezifischen Teile des Wärmetauschers sind in der Ablaufwanne angeordnet und können somit bei Schäden, insbesondere bei Lecks, keine Bauschäden verursachen. Voraussetzung ist natürlich, dass ein Ablauf oder Ablaufstutzen der Ablaufwanne fachgerecht an die Kanalisation angeschlossen ist.

Indem alle Flüssigkeit, die bei einem Leck austritt, in die Ablaufwanne gelangt, ist eine visuelle Kontrolle der Dichtheit der Wärmetauschereinheit auf einfache Weise möglich.

Die Anschlussstellen können Trennstellen sein, die ein Montieren und Demontieren, insbesondere werkzeugfrei, also rein manuell, der mindestens einen Wärmetauschereinheit erlauben. Eine solche Anschlussstelle kann beispielsweise ein Halteelement aufweisen, wie einen von Hand betätigbaren Bügel oder einen Haltering mit Bajonettverschluss etc. Es kann aber auch eine manuell mit einem Werkzeug lösbare und wieder herstellbare Verbindung vorliegen, beispielsweise mit einer oder mehreren Schrauben.

Die Anschlussstellen können bewegliche Verbindungen sein, beispielsweise Schwenkelemente oder flexible (Schlauch)Verbindungen, welche ein Herausschwenken oder Entfernen der mindestens einen Wärmetauschereinheit aus der Ablaufwanne erlauben. Dies kann ohne Unterbrechung des Frischwasserstromes durch den Wärmetauscher geschehen. Die Schwenkelemente können, entsprechend den anderen Elementen des Wärmetauschers, einwandig oder doppelwandig ausgeführt sein.

In einer Ausführungsform des Wärmetauschers
- liegen Anschlussstellen für die mindestens eine Wärmetauschereinheit vor, welche es erlauben, die mindestens eine Wärmetauschereinheit zumindest teilweise aus der Ablaufwanne zu entfernen, und
- sind entweder diese Anschlussstellen lösbare und wieder verbindbare Trennstellen, die ein Demontieren der mindestens einen Wärmetauschereinheit erlauben,
- oder sind diese Anschlussstellen bewegliche Verbindungen, welche ein Herausschwenken oder Entfernen der mindestens einen Wärmetauschereinheit aus der Ablaufwanne, erlauben.

Solche Anschlussstellen lassen sich auch realisieren, wenn die Rohrabschnitte anders als oben beschrieben verlaufen.

Gemäss einem **dritten Aspekt der Erfindung**, der unabhängig von den anderen Aspekten realisiert werden kann, liegt also ein einfach zu warten und zu reinigender Wärmetauscher vor, mit den folgenden Eigenschaften:
Wärmetauscher zum Aufwärmen von Frischwasser mittels Wärme von Abwasser bei einer Dusche oder Badewanne, aufweisend eine Ablaufwanne, mindestens eine in der Ablaufwanne, angeordnete und für den Anschluss in eine Frischwasserzuführung vorgesehene Wärmetauschereinheit, und ein Verteilelement, welches zum Verteilen von ablaufendem Abwasser über die mindestens eine Wärmetauschereinheit angeordnet ist, wobei
- Anschlussstellen für die mindestens eine Wärmetauschereinheit vorliegen, welche es erlauben, die mindestens eine Wärmetauschereinheit zumindest teilweise aus der Ablaufwanne zu entfernen, und
- entweder diese Anschlussstellen lösbare und wieder verbindbare Trennstellen sind, die ein Demontieren der mindestens einen Wännetauschereinheit erlauben,
- oder diese Anschlussstellen bewegliche Verbindungen sind welche ein Herausschwenken oder Entfernen der mindestens einen Wärmetauschereinheit aus der Ablaufwanne erlauben.

Damit ist es möglich, die mindestens eine Wärmetauschereinheit zur Wartung, Kontrolle und/oder Reinigung aus der Ablaufwanne zu entfernen.

In einer Ausführungsform des Wärmetauschers
ist die mindestens eine Wärmetauschereinheit direkt oder über weitere Elemente an einen ersten und einen zweiten Anschlussstutzen angeschlossen, wobei die Anschlussstutzen in die Ablaufwanne hinein respektive aus dieser hinaus führen, und wobei
- die mindestens eine Wärmetauschereinheit wahlweise in einer von zwei um 180° um eine vertikale Achse gegeneinander gedrehte Positionen an den Anschlussstutzen montierbar ist, und/oder
- die Anschlussstutzen wahlweise in einer von mindestens zwei oder drei jeweils um 90° um eine vertikale Achse gegeneinander gedrehte Positionen an der Ablaufwanne montierbar sind.

Derart in unterschiedlicher Weise montierbare Wärmetauschereinheiten und/oder Anschlussstutzen lassen sich auch realisieren, wenn die Rohrabschnitte anders als oben beschrieben verlaufen.

Gemäss einem **vierten Aspekt der Erfindung,** der unabhängig von den anderen Aspekten realisiert werden kann, liegt also ein flexibel respektive in vielfältiger Weise montierbarer Wärmetauscher vor, mit den folgenden Eigenschaften:
Wärmetauscher zum Aufwärmen von Frischwasser mittels Wärme von Abwasser bei einer Dusche oder Badewanne, aufweisend eine Ablaufwanne, mindestens eine in der Ablaufwanne angeordnete und für den Anschluss in eine Frischwasserzuführung vorgesehene Wärmetauschereinheit, und ein Verteilelement, welches zum Verteilen von ablaufendem Abwasser über die mindestens eine Wärmetauschereinheit angeordnet ist, wobei
die mindestens eine Wärmetauschereinheit direkt oder über weitere Elemente an einen ersten und einen zweiten Anschlussstutzen angeschlossen ist, wobei die Anschlussstutzen in die Ablaufwanne hinein respektive aus dieser hinaus führen, wobei
   - die mindestens eine Wärmetauschereinheit ist wahlweise in einer von zwei um 180° um eine vertikale Achse gegeneinander gedrehte Positionen an den Anschlussstutzen montierbar ist, und/oder
   - die Anschlussstutzen wahlweise in einer von mindestens zwei oder drei jeweils um 90° um eine vertikale Achse gegeneinander gedrehte Positionen an der Ablaufwanne montierbar sind.

Die Ablaufwanne selber kann im Wesentlichen symmetrisch geformt sein, aber mit einem seitlich herausgeführten Ablauf oder Ablaufstutzen. Dann kann bei der Montage der Ablaufwanne beispielsweise in einer Dusche die Ablaufwanne wahlweise in einer von zwei um 180° um eine vertikale Achse gegeneinander gedrehte Positionen montiert werden. Damit ist die Orientierung des Ablaufstutzens an die örtlichen Gegebenheiten anpassbar. Die Orientierung der Anschlussstutzen ist wie oben beschrieben ebenfalls an die örtlichen Gegebenheiten anpassbar.

Wenn die Wärmetauschereinheit selber ebenfalls in zwei Orientierungen montierbar ist, können die Zu- und Abführung des Frischwassers beliebig an die Ablaufwanne angeschlossen werden. Bei der Montage der Wärmetauschereinheit(en) oder von Anschlussstücken, die innerhalb der Ablaufwanne zur der/den Wärmetauschereinheit(en) führen kann dann deren Orientierung entsprechend gewählt werden. Damit vereinfacht sich die Montage stark, und es kann keine Fehler durch einen verdrehten Einbau der Ablaufwanne, geben. Fehler beim verdrehten Einbau einer Wärmetauschereinheit sind einfach korrigierbar.

Gemäss einem **fünften Aspekt der Erfindung,** der unabhängig von den anderen Aspekten realisiert werden kann, liegt also ein Wärmetauscher mit geringer Bauhöhe vor, mit den folgenden Eigenschaften:
Wärmetauscher zum Aufwärmen von Frischwasser mittels Wärme von Abwasser bei einer Dusche oder Badewanne, aufweisend eine Ablaufwanne, mindestens eine in der Ablaufwanne angeordnete und für den Anschluss in eine Frischwasserzuführung vorgesehene Wärmetauschereinheit, und ein Verteilelement, welches zum Verteilen von ablaufendem Abwasser über die mindestens eine Wärmetauschereinheit angeordnet ist, wobei
die mindestens eine Wärmetauschereinheit mehrere sequentiell aufeinander folgende Rohrabschnitte aufweist, die durch Umlenkabschnitte miteinander verbunden sind, und wobei
   in der Ablaufwanne ein Einlaufbereich, ein Siphonbereich und ein Ablaufbereich angeordnet sind, die im Betrieb des Wärmetauschers nacheinander und in dieser Reihenfolge von Abwasser durchströmt werden, wobei
   der Einlaufbereich im Luftaustausch mit der Umgebung oberhalb des Wärmetauschers steht,
   der Ablaufbereich im Luftaustausch mit einem Ablaufstutzen steht, der zum Anschluss an eine Kanalisation vorgesehen ist, und
   der Siphonbereich einen Luftaustausch zwischen Einlaufbereich und Ablaufbereich verhindert und den Durchfluss von Flüssigkeit vom Einlaufbereich zum Ablaufbereich zulässt,
   der Siphonbereich (entlang einer horizontalen Richtung betrachtet) auf einer ersten Seite durch eine Wannenwand und auf einer zweiten Seite durch ein Stauelement begrenzt ist,
   das Stauelement ablaufendes Abwasser zurückhält, so dass es über ein Verteilelement strömt, welches das Abwasser über die die mindestens eine Wärmetauschereinheit verteilt.

In einer Ausführungsform ist der Siphonbereich (entlang einer horizontalen Richtung betrachtet) an einer ersten Seite der Wärmetauschereinheit angeordnet und ist der Ablaufbereich an einer zweiten, der ersten gegenüberliegenden Seite der Wärmetauschereinheit angeordnet. Damit ist ein platzsparender und material sparender Siphon realisiert.

In einer Ausführungsform ist die Frischwasserzuführung und eine Frischwasserabführung der Wärmetauschereinheit durch eine Wannenwand an der zweiten Seite der Wärmetauschereinheit geführt. Damit ist ein Wärmetauscher mit geringer Bauhöhe realisierbar.

In einer Ausführungsform sind die Frischwasserzuführung und die Frischwasserabführung durch innerhalb der Ablaufwanne angeordnete lösbare Rohrverbindungen geführt und sind insbesondere diese Rohrverbindungen durch eine Horizontalbewegung der Wärmetauschereinheit herstellbar oder unterbrechbar. Damit ist die Wärmetauschereinheit durch eine Horizontalbewegung demontierbar und durch eine anschliessende Vertikalbewegung aus der Ablaufwanne entfernbar.

In einer Ausführungsform sind die Frischwasserzuführung und die Frischwasserabführung durch innerhalb der Ablaufwanne angeordnete lösbare Rohrverbindungen geführt und sind diese Rohrverbindungen durch eine Vertikalbewegung der Wärmetauschereinheit herstellbar oder unterbrechbar. Damit ist die Wärmetauschereinheit durch eine Vertikalbewegung demontierbar und aus der Ablaufwanne entfernbar. Anschlussstutzen zum Anschluss der Anschlussstücke können dabei durch den Wannenboden geführt sein, oder durch eine Wannenwand geführt und dann nach oben abgewinkelt sein, so dass die Anschlussstücke von oben in die Anschlussstutzen einsetzbar respektive entfernbar sind.

In einer Ausführungsform sind die Frischwasserzuführung und die Frischwasserabführung durch innerhalb der Ablaufwanne angeordnete lösbare Rohrverbindungen geführt und sind insbesondere diese Rohrverbindungen durch eine diagonale Bewegung der Wärmetauschereinheit herstellbar oder unterbrechbar. Dabei verläuft eine Bewegungsrichtung zum Unterbrechen oder Herstellen der Rohrverbindungen in einem Winkel von zwischen 30° und 60°, und insbesondere von rund 45° zur Horizontalen (in einem eingebauten Zustand des Wärmetauschers).

In einer Ausführungsform bilden die Rohrabschnitte der Wärmetauschereinheit genau einen Satz von übereinander angeordneten Rohrabschnitten, die nacheinander von herabtropfendem oder herablaufendem Abwasser beträufelt oder überströmt werden. Damit ist eine in der horizontalen besonders raumsparende Wärmetauschereinheit realisierbar.

In einer Ausführungsform sind die Rohrabschnitte übereinander und in horizontaler Richtung gegeneinander versetzt angeordnet. Sie können dabei entlang einer vertikalen Richtung betrachtet nacheinander durchströmt sein. Beispielsweise liegt eine erste Reihe von Rohrabschnitten vor, die im wesentlichen vertikal übereinander liegen, und eine zweite Reihe von Rohrabschnitten, die im wesentlichen vertikal übereinander liegen, wobei die erste und die zweite Reihe in horizontaler Richtung gegeneinander versetzt sind.

In einer Ausführungsform ist der Siphonbereich durch eine zwischen Wannenboden und Stauelement angeordnete Dichtung gegenüber dem Ablaufbereich abgedichtet ist. Diese Dichtung verhindert, dass Flüssigkeit aus dem Siphonbereich in den Ablaufbereich abfliesst.

In einer Ausführungsform ist der Einlaufbereich durch eine zwischen Wannenwand und einem Staudeckel angeordnete Dichtung gegenüber dem Ablaufbereich abgedichtet, wobei der Staudeckel verhindert, dass Luft aus dem Ablaufbereich in den Einlaufbereich gelangt. Diese Dichtung kann einstückig mit einer Dichtung gegenüber dem Wannenboden geformt sein. Alternativ kann sie als separate Dichtung gebildet sein.

In einer Ausführungsform verläuft die umlaufende Dichtung zwischen Staudeckel und Ablaufwanne in respektive entlang einer Ebene. Sie kann gegenüber der Horizontalen geneigt sein, insbesondere um einen Winkel zwischen 20° und 80° und beispielsweise zwischen 30° und 70°. Alternativ kann diese Ebene der Dichtung in der Vertikalen verlaufen, also mit einem Winkel von 90° zur Horizontalen. In diesem Fall wird die Dichtung gegen eine Wannenwand gedrückt.

In einer Ausführungsform und gemäss einen **weiteren Aspekt** der Erfindung ist die Dichtung eine mehrschichtige geschäumte Dichtung. Sie weist im Querschnitt gesehen mindestens zwei erste Dichtungsraupen auf, die voneinander beabstandet sind und zwischen denen eine zweite Dichtungsraupe verläuft und von den ersten Dichtungsraupen gestützt ist. Zur Herstellung der mehrschichtigen geschäumten Dichtung werden zuerst zwei nebeneinander und in einem im wesentlichen gleichbleibenden Abstand zueinander verlaufende erste Dichtungsraupen auf einem Trägerobjekt aufgebracht. Die beiden ersten Dichtungsraupen werden teilweise oder vollständig ausgehärtet. Anschliessend wird eine weitere Dichtungsraupe zwischen und/oder auf die beiden ersten Dichtungsraupen aufgebracht und ausgehärtet. Die beiden ersten Dichtungsraupen stabilisieren die weitere Dichtungsraupe, so dass das Material derselben beim Aufbringen nicht auf dem Trägerobjekt zerläuft. Damit kann eine höhere und stabilere Dichtung gefertigt werden als beim Aufbringen einer Dichtungsraupe in einem einzigen Arbeitsgang. In einer Ausführungsform ist die weitere Dichtungsraupe aus einem anderen Material als die beiden ersten Dichtungsraupen, insbesondere aus einem im ausgehärteten Zustand weicheren Material. Damit kann eine stabile und gleichwohl nachgiebige Dichtung realisiert werden. Eine solche mehrschichtige Dichtung kann völlig unabhängig von der hier gezeigten Anwendung für Wärmetauscher und Abwasserrinnen auch für andere Anwendungen realisiert werden.

Gemäss einem **sechsten Aspekt der Erfindung**, der unabhängig von den anderen Aspekten realisiert werden kann, liegt ein Wärmetauscher vor, der einen hygienischen Betrieb einer Dusche unterstützt, mit den folgenden Eigenschaften:
Wärmetauscher zum Aufwärmen von Frischwasser mittels Wärme von Abwasser bei einer Dusche oder Badewanne, aufweisend eine Ablaufwanne, mindestens eine in der Ablaufwanne angeordnete und für den Anschluss in eine Frischwasserzuführung vorgesehene Wärmetauschereinheit, wobei eine Frischwasserleitung durch den Wärmetauscher führt und vor oder nach dem Wärmetauscher ein Ablassventil in der Frischwasserleitung angeordnet ist, welche ein Entleeren eines Abschnittes der Frischwasserleitung in die Ablaufwanne erlaubt. Dieser Abschnitt umfasst beispielsweise auch eine Zuleitung zu einer Duschbrause oder einem Hahnen.

Das Ablassventil ist automatisch oder manuell betätigbar. Indem der genannte Abschnitt der Frischwasserleitung entleert wird, wird verhindert, dass stehendes Wasser bei Temperaturen vorliegt, bei denen sich Krankheitserreger wie beispielsweise Legionellen vermehren können.

Alle oben beschriebenen Aspekte der Erfindung sind mit den nachfolgend beschriebenen Ausführungsformen und Merkmalen in beliebiger Weise kombinierbar (ausser in Fällen, wo eine Ausführungsform eine nicht kompatible Alternative zu einem Aspekt ist).

In einer Ausführungsform sind die Umlenkabschnitte durch gebogene Rohre gebildet und ist ein Biegedurchmesser in den Umlenkabschnitten grösser als ein vertikaler Abstand zwischen aufeinanderfolgenden Rohrabschnitten.

In einer Ausführungsform verläuft ein Umlenkabschnitt zwischen aufeinanderfolgenden geraden Rohrabschnitten zumindest abschnittsweise ausserhalb der Ebene, in welcher die beiden geraden Rohrabschnitte liegen.

Beispielsweise kann der Umlenkabschnitt zumindest abschnittsweise in einer Ebene verlaufen, welche ausserhalb der Ebene liegt, in welcher die beiden geraden Rohrabschnitte liegen.

In einer Ausführungsform verläuft der Umlenkabschnitt zumindest abschnittweise in einer Ebene, welche parallel zu der Ebene liegt, in welcher die beiden geraden Rohrabschnitte liegen und von dieser Ebene beabstandet ist.

Beispielsweise kann so das Rohr (in dieser Folge) einen ersten, zweiten, dritten und vierten Rohrabschnitt aufweisen, und einen ersten Umlenkabschnitt zwischen dem ersten und dem zweiten Rohrabschnitt, einen zweiten Umlenkabschnitt zwischen dem zweiten und dem dritten Rohrabschnitt und einen dritten Umlenkabschnitt zwischen dem dritten und dem vierten Rohrabschnitt. Dabei sind der erste und der dritte Umlenkabschnitt, in einer Projektion auf die Ebene, in welcher die Rohrabschnitte verlaufen, zumindest teilweise überlappend. Weil der erste und der dritte Umlenkabschnitt dabei zumindest abschnittweise in verschiedenen Ebenen verlaufen, können sie aneinander vorbeigeführt werden.

In einer Ausführungsform ist die Wärmetauschereinheit an einem ersten Anschlussstück zur Zuführung von Frischwasser und einem zweiten Anschlussstück zum Abführen von Frischwasser angeschlossen, weist die Ablaufwanne einen ersten und einen zweiten Anschlussstutzen, auf, die in die Ablaufwanne hinein respektive aus dieser hinaus führen, und ist das erste Anschlussstück am ersten Anschlussstutzen sowie das zweite Anschlussstücke am zweiten Anschlussstutzen lösbar montiert.

Die beiden Anschlussstücke und entsprechend auch die Anschlussstutzen können beide an derselben Seite des Wärmetauschers angeordnet sein, oder an entgegengesetzten Seiten, oder in einem Bereich in der Mitte des Wärmetauschers. Sind sie an derselben Seite angeordnet, so liegt eine gerade Anzahl von Rohrabschnitten in einer Wärmetauschereinheit vor. Sind sie an entgegengesetzten Seiten angeordnet, so liegt eine ungerade Anzahl vor. Sind sie in einem Bereich in der Mitte angeordnet, so können an den Anschlussstücken zwei Wärmetauschereinheiten angeschlossen sein, die sich in entgegengesetzte Richtungen erstrecken.

In einer Ausführungsform sind die Anschlussstücke manuell, insbesondere werkzeugfrei, also rein manuell, montierbar und demontierbar. In einer anderen Ausführungsform sind die Anschlussstücke mit Schrauben lösbar an den Anschlussstutzen montiert.

In einer Ausführungsform weist der erste Anschlussstutzen einen Absperrhahn zum Unterbrechen einer Frischwasserzufuhr auf.

In einer Ausführungsform ist mindestens eines der Anschlussstücke, am entsprechenden Anschlussstutzen, mittels eines schwenkbaren Verschlussbügels montiert.

Damit kann eine sichere, wasserdichte und rüttelfeste Verbindung realisiert werden. Der Verschlussbügel kann einrastend sein. Der Verschlussbügel kann so geformt sein, dass eines oder mehrere der darüber angeordneten Elemente (Verteilelement und/oder Stauelement, z.B. als Tropfblech realisiert, Deckel oder Abdeckblech) nur dann vollständig und korrekt eingesetzt werden kann, wenn der Verschlussbügel in einer Endstellung im angeschlossenen Zustand des entsprechenden Anschlussstücks ist. Dazu kann das entsprechende Element, beispielsweise das Verteilelement oder Stauelement, Elemente aufweisen, die nach innen vorstehen und mit dem Verschlussbügel kollidieren, wenn dieser nicht in der genannten Endstellung ist.

In einer Ausführungsform drückt mindestens einer der Verschlussbügel beim Öffnen das entsprechende Anschlussstück vom entsprechenden Anschlussstutzen, weg.

Damit ist es möglich, die Haltekraft der Verbindung zwischen Anschlussstücke und Anschlussstutzen zu überwinden, ohne dass wie bei einem manuellen Abziehen das Risiko besteht, dass beim plötzlichen Lösen der Verbindung das Anschlussstück zu weit gezogen wird und dabei die Wärmetauschereinheit(en) verbogen werden.

Der Verschlussbügel kann am Anschlussstutzen montiert sein, insbesondere drehbar, wobei mindestens ein korrespondierendes Andrückelement am Anschlussstück angeordnet ist. Beim Schliessen des Verschlussbügels wird das Andrückelement durch den Verschlussbügel erfasst und damit das Anschlussstück gegen den Anschlussstutzen gezogen. Umgekehrt kann auch der Verschlussbügel am Anschlussstück montiert sein, insbesondere drehbar, und entsprechend kann das korrespondierende Andrückelement am Anschlussstutzen angeordnet sein. Die Funktionsweise beim Schliessen und Öffnen ist analog.

In einer Ausführungsform weist der Verschlussbügel mindestens ein Verriegelungselement auf, welches eine Öffnungsbewegung des Verschlussbügels blockiert oder erschwert, wenn eine Kraft zwischen Anschlussstück und Anschlussstutzen wirkt, welche die beiden auseinander treibt. Damit kann verhindert werden, dass der Verschlussbügel unbeabsichtigt geöffnet wird, solange die mindestens eine Wärmetauschereinheit unter Druck (des Frischwassers) steht. Das Verriegelungselement kann beispielsweise realisiert werden, indem eine Kontaktfläche des Verschlussbügels, welche in Wirkverbindung mit einem korrespondierenden Andruckelement steht, eine Krümmung oder eine Unstetigkeit oder Raste aufweist.

In einer Ausführungsform
- ist mindestens einer der Verschlussbügel mechanisch mit dem Absperrhahn gekoppelt und schliesst beim Öffnen des Verschlussbügels den Absperrhahn,
- oder blockiert der Absperrhahn in seiner geöffneten Stellung eine Öffnungsbewegung eines der Verschlussbügel und gibt der Absperrhahn in seiner geschlossenen Stellung diese Öffnungsbewegung frei.

Damit werden unfreiwillige Duschen beim Demontieren der Wärmetauschereinheit vermieden.

An den Anschlussstutzen können Sensoren zur Messung einer Eintrittstemperatur, einer Austrittstemperatur und/oder ein Durchflussmesser für das Frischwasser angeordnet sein. Ferner kann ein Sensor für eine Abwassertemperatur vorliegen. Damit lässt sich ein Wirkungsgrad der Vorrichtung zumindest annähernd bestimmen und einem Benutzer übermitteln oder anzeigen.

An den Anschlussstutzen oder den Anschlussstücken, insbesondere an jenem für die Frischwasserzufuhr, können Filterelemente angeordnet sein. Dort können auch Rückflussverhinderer, beispielsweise Einwegventile, angeordnet sein, insbesondere in der Frischwasserzufuhr.

In einer Ausführungsform führt mindestens einer der beiden Anschlussstutzen, in vertikaler Richtung durch einen Wannenboden der Ablaufwanne und ist als Winkelstück beispielsweise mit einem Winkel von 90° zum horizontalen Anschluss einer Frischwasserzuführung respektive einer Frischwasserabführung ausgebildet.

In einer Ausführungsform sind die Anschlussstutzen, drehbar oder in verschiedenen, jeweils um 90° um eine vertikale Achse zueinander gedrehten Positionen montierbar. Damit kann die Orientierung der Anschlussstutzen in einfacher Weise an die örtlichen Gegebenheiten bei der Montage des Wärmetauschers angepasst werden, je nachdem, aus welcher Richtung die Leitungen für das Frischwasser an den Wärmetauscher herangeführt werden.

In einer Ausführungsform weist der Wannenboden eine Vertiefung auf, welche ablaufendes Abwasser zu mindestens einem Ablaufstutzen zum Anschluss an eine Kanalisation auf, und sind der oder die Anschlussstutzen in einem Bereich neben der Vertiefung angeordnet.

In einer Ausführungsform ragt ein Abschnitt des Anschlussstutzens in das Anschlussstück hinein. Dadurch ist dieser Abschnitt des Anschlussstutzens an einem korrespondierenden Element im Innern des Anschlussstücks fixierbar. Dadurch wiederum ist die Verbindung zwischen Anschlussstutzen und Anschlussstücks vor dem Herausziehen gesichert. Das Innere des Anschlussstückes kann durch eine Öffnung zugänglich sein, welche offen sein kann oder mit einem transparenten oder intransparenten Deckel verschlossen sein kann.

Zwischen der Vertiefung und dem Ablaufstutzen kann ein Wannen-Geruchsverschluss angeordnet sein. Der Wannen-Geruchsverschluss kann durch einen vertikalen Wandabschnitt realisiert sein, welcher einen oberen Bereich des Ablaufstutzens blockiert, und indem ein anschliessender Bereich des Ablaufstutzens eine Erhöhung aufweist, welche ablaufendes Abwasser mindestens bis zur Höhe eines unteren Randes des genannten Wandabschnitts staut.

Alternativ oder zusätzlich kann auch der Ablaufstutzen eine Verschlusselement oder Ablaufsperre aufweisen, mit welcher der Ablauf verschlossen werden kann.

Damit ist es möglich, zur Reinigung des Wärmetauschers den Ablauf zu verschliessen, die Ablaufwanne mit Wasser und einem Reinigungsmittel zu füllen und das Reinigungsmittel einwirken zu lassen.

In einer Ausführungsform ist eine Wärmetauschereinheit oder ein Satz von Wärmetauschereinheiten bewegbar in der Ablaufwanne montiert und ist ohne Unterbrechung der durch den Wärmetauscher führenden Frischwasserzufuhr aus der Ablaufwanne heraus bewegbar, insbesondere durch eine Schwenkbewegung um eine Schwenkachse.

Damit ist es möglich, weil die Frischwasserzufuhr nicht unterbrochen ist, den Wärmetauscher auch im herausgeschwenkten Zustand mit Frischwasser, beispielsweise durch eine durch den Wärmetauscher gespeiste Brause, zu reinigen.

In einer Ausführungsform liegt eine Anschlusseinheit vor, insbesondere eine Schwenkeinheit mit einem ersten drehbaren Anschluss für die Frischwasserzufuhr zu mindestens einer Wärmetauschereinheit und einem zweiten drehbaren Anschluss für die Frischwasserabfuhr von der mindestens einem Wärmetauschereinheit, wobei die beiden drehbaren Anschlüsse um eine gemeinsame Schwenkachse drehend angeordnet sind.

Die Schwenkachse kann horizontal verlaufen. Dann verläuft die Schwenkbewegung der mindestens einen Wärmetauschereinheit in einer vertikalen Ebene.

Die Schwenkachse kann im Winkel zur Horizontalen verlaufen, beispielsweise mit einem Winkel von mindestens 5°, 10°, oder 20° zur Horizontalen. Dann verläuft die Schwenkbewegung der mindestens einen Wärmetauschereinheit in einer Ebene die um einen entsprechenden Winkel zur Vertikalen verläuft. Auf diese Weise kann vermieden werden, dass sich die mindestens eine Wärmetauschereinheit beim Herausschwenken mit fest installierten sanitären Elementen, beispielsweise einer Brausestange kollidiert.

Die herausschwenkbare mindestens eine Wärmetauschereinheit kann mechanisch mit einem ebenfalls schwenkbaren weiteren Element, beispielsweise einem Deckel und / oder einem Verteilelement gekoppelt sein. Die Kopplung kann ein Scherenmechanismus sein. Sie bewirkt, dass beim Herausschwenken des weiteren Elementes die Wärmetauschereinheit ebenfalls herausgeschwenkt wird.

In einer Ausführungsform liegt eine doppelwandige Trennung zwischen frischwasserführenden Bereichen und abwasserführenden Bereichen durch einen Zwischenraum vor, wobei die Rohrabschnitte durch Doppelwandrohre gebildet sind, und wobei
- doppelwandige Anschlussstücke und optional auch doppelwandige Anschlussstutzen vorliegen, und ein Zwischenraum der Anschlussstücke mit einem Zwischenraum der Doppelwandrohre verbunden ist,

Die Anschlussstück und optional auch die Anschlussstutzen können also doppelwandig ausgebildet sein, beispielsweise mit einer innern und einer äusseren Wand, die durch Stege miteinander verbunden sind. In gleicher Weise können auch die Anschlussstutzen doppelwandig ausgebildet sein, zumindest im Bereich, der innerhalb der Ablaufwanne liegt und somit mit Abwasser in Kontakt treten kann. Dann werden beim Verbinden eines Anschlussstücks mit einem Anschlussstutzen auch die Zwischenräume des Anschlussstücks mit jenen des Anschlussstutzens verbunden.

Gemäss einer Ausführungsform weist mindestens eines der Anschlussstücke eines oder mehrere Umlenkelemente auf, jeweils entsprechend einem Leitungsabschnitt mit einer Umlenkung um jeweils 180°. Die beiden Enden eines solchen Leitungsabschnittes sind jeweils an einen Rohrabschnitt angeschlossen. Falls die Rohrabschnitte doppelwandig sind, sind auch die Umlenkelemente doppelwandig, und ein Zwischenraum der Umlenkelemente ist mit dem Zwischenraum der Doppelwandrohre verbunden. Die Umlenkelemente können mindestens teilweise als Teil der Anschlussstücke geformt sein. Die Umlenkelemente bilden also, was die Flüssigkeitsführung des Frischwassers betrifft, Umlenkabschnitte. Die Umlenkelemente sind aber nicht als Rohre sondern als hohle Bereiche im Anschlussstück ausgebildet, beispielsweise als Aussparungen bei der Herstellung des Anschlussstücks durch Giessen, Spritzen oder Fräsen. Die Rohre sind zur Verbindung mit den Umlenkelementen in die Anschlussstücke eingesetzt. Sie können dabei mit Dichtungsringen, einer Dichtungsmasse wie Silikon oder einem Zweikomponenten-Elastomer abgedichtet werden. Wenn die Rohrabschnitte übereinander liegen, verläuft die Umlenkung in einer im Wesentlichen vertikalen Ebene.

Eine weitere Alternative ist, ein Anschlussstücks mit einer elastischen Umhüllung als Aussenhaut beispielsweise aus Silikon, zu versehen, wobei ein Abschnitt der Aussenhaut zur Abdichtung zu einem eingesteckten Rohrabschnitt ausgebildet ist.

In einer Ausführungsform weist eines der Anschlussstücke eine Umhüllung aus einem elastischen Kunststoff auf, welche mindestens einen Teil des Anschlussstücks bedeckt und eine zweite Trennung zwischen frischwasserführenden Bereichen und abwasserführenden Bereichen des Wärmetauschers bildet. Diese Ausführungsform kann auch realisiert werden, wenn keine Umlenkelemente einer Umlenkung um 180° vorliegen oder gar keine Umlenkelemente vorliegen. Wenn gar keine Umlenkelemente vorliegen, sind die Anschlussstücke reine Sammelstücke.

Ein Zwischenbereich zwischen der Umhüllung und dem jeweiligen Anschlussstück ist mit einem Zwischenraum der Rohre und/oder anderer Elemente in Verbindung, so dass Leckwasser vom Zwischenraum zum Zwischenbereich und ungekehrt fliessen kann. Liegt kein Leckwasser vor, kann die Umhüllung eng am Anschlussstück anliegen. Wenn Leckwasser austritt, kann sich die Umhüllung aufgrund ihrer Elastizität ausdehnen und das Leckwasser aufnehmen und weiterführen.

In einer Ausführungsform bildet ein Bereich der Umhüllung einen Dichtungsbereich zwischen dem Anschlussstück und der Ablaufwanne, insbesondere einer Wannenwand oder dem Wannenboden. Dieser Dichtungsbereich dichtet also die Frischwasserzuführung oder die Frischwasserabführung bezüglich des Inneren der Ablaufwanne ab, insbesondere als zweite Trennung. Diese Trennung kann auch als äussere Trennung oder äusseren Wand - ausgehend von Frischwasserbereich - bezeichnet werden.

In einer Ausführungsform bildet ein Bereich der Umhüllung einen Dichtungsbereich zwischen dem Anschlussstück und einem in diesen eingesteckten Rohrabschnitt. Dieser Dichtungsbereich dichtet also einen Rohrabschnitt bezüglich des Inneren der Ablaufwanne ab, insbesondere als zweite, äussere Trennung. Die Umhüllung liegt am Aussenrohr des Rohrabschnitts an, entweder als eine dem Rohrabschnitt folgend vom Anschlussstück wegführende Manschette, oder als eine in das Anschlussstück hineingeführte und zwischen dem Anschlussstück und dem Rohrabschnitt liegende Manschette.

In einer Ausführungsform bildet ein Bereich der Umhüllung einen Dichtungsbereich zwischen dem Anschlussstück, und einem in das dem Anschlussstück, eingesteckten Verschluss einer Sichtöffnung. Dieser Dichtungsbereich dichtet also den Zwischenraum des Anschlussstücks bezüglich des Inneren der Ablaufwanne ab, als Teil einer zweiten, äusseren Trennung. Der Dichtungsbereich überlappt beispielsweise die Sichtöffnung und ist durch den eingesteckten Verschluss nach innen gegen den Rand der Sichtöffnung gedrückt.

In einer Ausführungsform bildet ein Bereich der Umhüllung einen Dichtungsbereich zwischen dem Anschlussstück und einem auf dem Anschlussstück aufliegenden Deckel, insbesondere einem Staudeckel, oder einem anderen Element, wobei eine Öffnung des Deckels vorliegt und durch diesen Dichtungsbereich die Öffnung gegenüber einem Bereich um das Anschlussstück abgedichtet ist. Dieser Bereich um das Anschlussstück ist der Ablaufbereich. Typischerweise dichtet also dieser Dichtungsbereich den Einlaufbereich gegenüber dem Ablaufbereich ab. Die Öffnung im Deckel respektive Staudeckel erlaubt beispielsweise einen Blick auf die Umhüllung oder durch die Umhüllung (falls sie transparent ist) oder durch ein Loch in der Umhüllung und durch eine hinter diesem Loch im Anschlussstück angeordnete Sichtöffnung.

In einer Ausführungsform ist in einem Zwischenbereich zwischen der Umhüllung und dem Anschlussstück ein Material eingebracht, welches bei Aufnahme von Wasser seine Farbe ändert und wobei die Umhüllung transparent oder semitransparent ist (also nicht undurchsichtig). Damit führt Leckwasser, das in den Zwischenbereich eintritt, zu einer Farbänderung, die durch die Umhüllung hindurch von aussen erkennbar ist, beispielsweise durch eine wie oben beschriebene Öffnung in einem Deckel oder Staudeckel hindurch.

Die Umlenkelemente können in Verbindungsstücken ausgebildet sein, welche nicht auch die Funktion von Anschlussstücken oder Sammelstücken aufweisen. Solche Verbindungsstücke weisen nur eines, zwei oder mehr Umlenkelemente auf und verbinden dadurch zwei, vier oder eine höhere, gerade Anzahl von Rohrabschnitten miteinander. Somit kann eine Wärmetauschereinheit an einem Ende ein solches Verbindungsstück aufweisen und am anderen Ende ein Anschlussstück, welches einen Anschluss eines Rohrabschnitts zur Frischwasserzuführung und eines anderen Rohrabschnitts zur Frischwasserabführung bildet, und optional auch eines oder mehr Umlenkelemente aufweist.

In einer Ausführungsform sind die Rohrabschnitte gebogen, wobei jeder der Rohrabschnitte in einer zugeordneten horizontalen Ebene verläuft. Jeweils ein Ende eines gebogenen Rohrabschnitts kann in der Nähe eines Anfangs desselben Rohrabschnitts angeordnet sein. Ein gebogener Rohrabschnitt kann also fast eine geschlossene Schlaufe bilden. Insbesondere kann er dabei einem Kreisabschnitt folgend geformt sein, beispielsweise um einen Winkel von mehr als 270°. Mehrere solcher Rohrabschnitte sind übereinander angeordnet, beispielsweise exakt übereinander. Sie können alternativ in radialer Richtung zueinander versetzt angeordnet sein, beispielsweise indem übereinander liegende Rohrabschnitte jeweils Kreisabschnitten mit unterschiedliche Radien folgen.

Jeweils am Anfang und Ende dieser gebogenen Rohrabschnitte sind wie bereits beschrieben Anschlussstücke oder Verbindungsstücke angeordnet. In dieser Ausführungsform können diese Anschlussstücke oder Verbindungsstücke zu einem einzigen Teil kombiniert sein. Ein solches kombiniertes Anschlussstück oder Verbindungsstück weist also Umlenkelemente für jeweils den Anfang und das Ende der Rohrabschnitte auf.

In diesem Wärmetauscher mit gebogenen Rohrabschnitten können Verbindungsstücke vorliegen, welche jeweils eines oder mehrere Umlenkelemente als Umlenkabschnitte aufweisen, wobei ein Umlenkelement einem Leitungsabschnitt entspricht, der einen vertikalen Versatz der Leitung realisiert, also die beiden Enden eines solchen Leitungsabschnitts an Rohrabschnitte angeschlossen sind, die vertikal zueinander versetzt sind und die Leitung in die gleiche Richtung oder in den gleichen Umlaufsinn weiterführen.

Für alle Ausführungsformen gilt, dass Anschlussstücke oder Verbindungsstücke aus Kunststoff oder Metall gegossen oder gespritzt sein können. Sie können einwandig oder doppelwandig hergestellt sein. Sie können aus nur einem Material hergestellt sein, oder aus einer Kombination, beispielsweise mit einem inneren Teil aus Metall, in welchem das Frischwasser geführt ist, und mit einem äusseren Teil oder einer Umhüllung beispielsweise aus Kunststoff, insbesondere Silikon, welcher die zweite Trennwand realisiert.

In einer Ausführungsform weist der Wärmetauscher eine doppelwandige Trennung zwischen frischwasserführenden Bereichen und abwasserführenden Bereichen durch einen Zwischenraum auf, wobei die Rohrabschnitte durch Doppelwandrohre gebildet sind, und wobei
- eine Anschlusseinheit vorliegt, wobei ein Innenbereich der Anschlusseinheit von abwasserführenden Bereichen flüssigkeitsdicht getrennt ist, und frischwasserführende Leitungen insbesondere Rohre und/oder Panzerschläuche, einwandig im Innenbereich der Anschlusseinheit angeordnet sind, und der Innenbereich mit einem Zwischenraum der Doppelwandrohre verbunden ist.

Eine solche Anschlusseinheit kann auch ein doppelwandiges Anschlussstück oder Verbindungsstück sein.

Allgemein gilt bezüglich des Zwischenraums: Verschiedene Volumina, die den Zwischenraum bilden (Zwischenraum der Anschlussstücke, Zwischenraum der Doppelwandrohre, Innenbereich, ...) sind in hydraulischer Verbindung zueinander (engl. "in fluid connection"), so dass Flüssigkeit von einen Volumen in die anderen Volumina gelangen kann. Entsteht ein Leck, so gelangt - je nach Lage des Lecks - entweder Frischwasser oder Abwasser in den Zwischenraum und kann dort detektiert werden. Dazu kann ein Sensor im Zwischenraum vorliegen und/oder eine Kontrollöffnung, bei welcher die leckende Flüssigkeit austritt oder durch ein Fenster oder eine Sichtöffnung sichtbar wird.

Verbindungselemente, beispielsweise Stege, Abstandshalter, Schweisspunkte, etc. welche den Zwischenraum überbrücken haben beispielsweise einen Durchmesser oder in mindestens einer Richtung eine maximale Ausdehnung von zwei Millimetern. Dies entspricht gängigen Normen zur Gestaltung von Wärmetauschern zwischen Frischwasser und Abwasser.

In einer Ausführungsform ist die Anschlusseinheit als ganzes bezüglich der Ablaufwanne schwenkbar und an schwenkbaren Anschlüssen angeschlossen, und ist die mindestens eine Wärmetauschereinheit im Wesentlichen starr an der Anschlusseinheit angeschlossen und durch Schwenken der Anschlusseinheit aus der Ablaufwanne schwenkbar.

In einer Ausführungsform ist die Anschlusseinheit im Wesentlichen starr in der Ablaufwanne montiert und weist einwandige frischwasserführende Leitungen, insbesondere Rohre und/oder flexible Schläuche, insbesondere Panzerschläuche, im Innenbereich auf, zum Übergang zwischen Anschlussstutzen und Wärmetauschereinheiten, und ist die mindestens eine Wärmetauschereinheit an der Anschlusseinheit mit einem ersten und einem zweiten drehbaren Anschluss angeschlossen, wobei die beiden drehbaren Anschlüsse um eine gemeinsame Schwenkachse drehend angeordnet sind.

In einer Ausführungsform ist die Anschlusseinheit im Wesentlichen starr in der Ablaufwanne montiert und weist aber schwenkbare Elemente auf, welche bezüglich anderen Elementen der Anschlusseinheit schwenkbar angeordnet sind und mit diesen anderen Elementen mit elastischen und flüssigkeitsdichten Elementen, beispielsweise einem Balg oder Membranen aus Gummi oder einem anderen Kunststoff flüssigkeitsdicht verbunden sind und dadurch eine Abtrennung des Innenbereiches der Anschlusseinheit von den abwasserführenden Bereichen bewirken. Die mindestens eine Wärmetauschereinheit ist an den schwenkbaren Elementen befestigt und die Anschlüsse der Wärmetauschereinheit führen durch die schwenkbaren Elemente hindurch, beispielsweise zu flexiblen Schläuche, insbesondere Panzerschläuchen, im Innenbereich der Anschlusseinheit.

In einer Ausführungsform weist der Wärmetauscher einen Siphon auf, durch welchen Abwasser zum Verteilelement gelangt, wobei der Siphon die mindestens eine Wärmetauschereinheit umgibt.

Genauer kann gesagt werden, dass der Siphon, in einer horizontalen Schnittebene im Bereich der Wärmetauschereinheit betrachtet, die mindestens eine Wärmetauschereinheit umgibt. Der Siphon verläuft also um die mindestens eine Wärmetauschereinheit herum. Kanalgase, welche durch die Verteilöffnungen treten, werden durch den Siphon zurückgehalten, insbesondere an allen Seiten um die mindestens eine Wärmetauschereinheit herum. Dies ist im Gegensatz zu Wärmetauschern aus dem Stand der Technik, wo zwischen den Kanalgasen und der Umgebung nur ein Deckel liegt, der folglich möglichst gasdicht auf seiner Unterlage aufliegen musst. Alternativ ermöglicht diese Konstruktion, dass kein weiterer Siphon nach dem Wärmetauscher benötigt wird (beispielsweise der oben genannte Wannen-Geruchsverschluss), wodurch die Bauhöhe des Wärmetauschers niedrig gehalten werden kann.

Der Siphon kann mehrstufig sein, d.h. aus mehreren seriell hintereinander geschalteten einzelnen Siphons oder Siphonstufen bestehen. Damit kann eine gesetzlich geforderte Stauhöhe des Siphons (beispielsweise 5 cm, sogenannte Sperrwasserhöhe) mit einer geringen Bauhöhe erreicht werden.

In einer Ausführungsform weist der Wärmetauscher ein Stauelement auf, welches die mindestens eine Wärmetauschereinheit umgibt, und ein Verteilelement zum Verteilen von Abwasser über die die mindestens eine Wärmetauschereinheit, wobei das Stauelement ablaufendes Abwasser zurückhält, so dass es über das Verteilelement strömt.

Das Verteilelement kann Verteilöffnungen aufweisen. Diese sind im Wesentlichen senkrecht zumindest oberhalb eines oder mehrerer von geraden Rohrabschnitten angeordnet. Sie können auch oberhalb von gebogenen Rohrabschnitten angeordnet sein, beispielsweise wenn mehrere gebogene Rohrabschnitte, welche jeweils im Wesentlichen horizontal verlaufen, übereinander angeordnet eine Umlenkung bilden. Das Verteilelement kann einstückig mit dem Stauelement geformt sein, beispielsweise in Form eines nach unten offenen länglichen Behälters mit Löchern im Deckel.

In einer Ausführungsform weist der Wärmetauscher einen Deckel auf, der mit einem Deckelrand das Stauelement umgibt,
Genauer kann gesagt werden, dass der Deckel, in einer horizontalen Schnittebene im Bereich des Stauelements betrachtet, das Stauelement umgibt.

Daraus ergibt sich insbesondere, dass ein nach unten reichender Teil des Deckelrands den Siphon bildet, respektive den Bereich, unter welchem das Abwasser hindurchfliessen muss, und der damit einen Geruchsverschluss bildet.

Ablaufendes Wasser läuft also unter dem Deckelrand hindurch und über das Stauelement zum Verteilelement und durch dessen Verteilöffnungen.

In einer Ausführungsform des Wärmetauschers liegt das Stauelement insbesondere mit einem unteren Rand auf dem Wannenboden auf, mit einer umlaufenden Dichtung zwischen dem Stauelement und dem Wannenboden.

Die Dichtung kann am Stauelement befestigt sein. Alternativ kann die Dichtung am Wannenboden befestigt sein, und das Stauelement liegt auf der Dichtung auf oder ist in die Dichtung eingesteckt.

Falls die Dichtung nicht perfekt dichtet, oder wenn das Stauelement entfernt wird, leert sich folglich der Siphon in die Ablaufwanne und in den Ablaufstutzen hinein.

In einer Ausführungsform des Wärmetauschers weist dieser mindestens zwei Wärmetauschereinheiten auf, wobei in Abhängigkeit von einem Volumenstrom des Abwassers nur eine der Wärmetauschereinheit betrieben oder zwei Wärmetauschereinheiten betrieben sind.

Dadurch wird also bei einem niedrigen Volumenstrom (oder Durchflussmenge) nur eine Wärmetauschereinheit betrieben, das heisst, von Abwasser überströmt und von Frischwasser durchströmt. Überschreitet der Volumenstrom einen ersten Schwellwert, so wird abrupt oder kontinuierlich der Betrieb einer weiteren Wärmetauschereinheit aufgenommen. Analog kann eine dritte Wärmetauschereinheit mit einem weiteren Schwellwert vorliegen, etc.

In einer Ausführungsform ist eine der mindestens zwei Wärmetauschereinheiten durch ein druckgesteuertes Ventil gespeist, welches sich öffnet, wenn ein Eingangsdruck des Ventils einen ersten Druckschwellwert übersteigt.

Das Ventil schliesst sich beispielsweise wieder beim Unterschreiten eines zweiten Druckschwellwertes am Eingang des Ventils. Der zweite Druckschwellwert kann kleiner als der erste sein.

In einer Ausführungsform weist das Verteilelement eine erste und eine zweite Gruppe von Verteilöffnungen auf, wobei die Verteilöffnungen der ersten Gruppe oberhalb einer ersten Wärmetauschereinheit angeordnet sind und schon bei einem niedrigen Volumenstrom des Abwassers durchströmt werden, und die Verteilöffnungen der zweiten Gruppe oberhalb einer zweiten Wärmetauschereinheit angeordnet sind und erst durchströmt werden, wenn der Volumenstrom des Abwassers einen Schwellwert überschreitet.

Dies kann realisiert werden indem beispielsweise die Verteilöffnungen der zweiten Gruppe jeweils einen erhöhten Rand (verglichen mit den Verteilöffnungen der ersten Gruppe aufweisen. Alternativ kann ein Überlauf oder Staubereich des Stauelements, der zu dem Verteilöffnungen der zweiten Gruppe führt. höher sein als ein entsprechender Überlauf, der zu den Verteilöffnungen der ersten Gruppe führt. Es kann alternativ oder zusätzlich eine Trennwand oder ein trennender Steg zwischen den Bereichen der beiden Gruppen von Verteilöffnungen liegen. Der Steg wird beispielsweise nur dann von Abwasser überströmt, wenn dessen Volumenstrom den Schwellwert überschreitet.

In einer Ausführungsform weist das Verteilelement mindestens eine Überlauföffnung auf, welche Abwasser abfliessen lässt, wenn die Verteilöffnungen das Abwasser nicht abführen können.

Die Überlauföffnung kann das Abwasser an der mindestens einen Wärmetauschereinheit vorbei und/oder über die Rohre der Wärmetauschereinheit fliessend in die Ablaufwanne führen.

Der Wärmetauscher kann wegen seiner geringen Bauhöhe in einem Randbereich einer Duschwanne angeordnet werden. Er kann aber auch nicht unmittelbar beim Ablauf einer Dusche oder Badewanne angeordnet werden, beispielsweise in oder an einer Wand neben einer Dusche oder Badewanne, oder im Bereich eines Badewannenrandes. Der Wärmetauscher kann mit Abwasser aus mehreren beispielsweise nebeneinander angeordneten Duschen oder aus einer Dusche und einer beispielsweise neben der Dusche angeordneten Badewanne versorgt werden.

In einer Ausführungsform ist der Wärmetauscher mit einer Duschtrennwand zu einer Baueinheit kombiniert. Damit lässt sich ein spritzwasserdichter Übergang zwischen den beiden zuverlässig und einfach realisieren und wird die Endmontage vereinfacht.

In einer Ausführungsform weist der Wärmetauscher einen Stöpsel auf, wobei in einer ersten Stellung des Stöpsels der Stöpsel ein Ablaufen von Wasser aus der Ablaufwanne verhindert und in einer zweiten Stellung der Stöpsel das Ablaufen von Wasser aus der Ablaufwanne zulässt. Dabei kann der Stöpsel eine Überlauföffnung aufweisen, welche in beiden Stellungen ein Ablaufen von Wasser zulässt, wenn dieses in der Ablaufwanne eine bestimmte Höhe übersteigt.

Die verschiedenen Aspekte der Erfindung lassen sich einzeln, also unabhängig voneinander realisieren, oder auch in Kombination miteinander.

Grundsätzlich ist der Wärmetauscher gemäss den verschiedenen Aspekten zum Wärmeaustausch zwischen Abwasser und Frischwasser vorgesehen. Es sind aber auch andere Anwendungen möglich, bei denen beispielsweise eine geringe Bauhöhe bei gutem Wirkungsgrad, und/oder eine hohe Flexibilität bei der Montage und/oder eine gute Wartbarkeit und einfache Reinigung und/oder eine hohe Sicherheit bezüglich Lecken gefordert sind. Der Einfachheit halber werden die beiden Fluide oder Medien, zwischen denen die Wärme ausgetauscht wird, als Abwasser und als Frischwasser bezeichnet, jedoch kann stattdessen allgemein auch von einem ersten (Wärmeenergie abgebenden) Medium und einem zweiten (Wärmeenergie aufnehmenden) Medium gesprochen werden

Die Wärmetauschereinheiten werden in der Regel als Gegenstrom- oder Kreuzgegenstrom-Wännetauscher betrieben. Ein Betrieb als Gleichstrom- oder Kreuzgleichstrom-Wämnetauscher ist aber auch möglich.

Für alle Aspekte und Ausführungsformen gilt, dass die Ablaufwanne respektive der Wärmetauscher angeordnet werden kann, um Abwasser aus einer Duschtasse oder aus einem Waschbecken oder aus einer Badewanne aufzunehmen. Grundsätzlich sind Anwendungen auch in anderen Bereichen möglich.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figuren 1a-1c: eine erste Ausführungsform eines Wärmetauschers in verschiedenen Schnittansichten;
- Figur 1d: ein Detail einer Variante einer Dichtung;
- Figur 2: eine Variante der ersten Ausführungsform;
- Figuren 3a-3d: eine zweite Ausführungsform eines Wärmetauschers in verschiedenen Schnittansichten;
- Figuren 4a-4d: eine dritte Ausführungsform eines Wärmetauschers in verschiedenen Schnittansichten;
- Figuren 5a-5b: Einbauvarianten von Wärmetauschern;
- Figuren 6a-6m: eine vierte Ausführungsform eines Wärmetauschers in verschiedenen Schnitten und Ansichten;
- Figuren 7a-7d: eine fünfte Ausführungsform eines Wärmetauschers in verschiedenen Schnittansichten und Zuständen;
- Figur 8: einen mehrstufigen Siphon;
- Figuren 9a-9b: ein Verteilelement und Speisungen eines mehrstufig betreibbaren Wärmetauschers;
- Figur 10: einen Wärmetauscher mit an der Ablaufwanne ausgebildeten Stauelement
- Figur 11: ein Rohr einer Wärmetauschereinheit;
- Figuren 12a-12b: doppelwandige Rohre;
- Figur 13: einen schwenkbaren Anschluss;
- Figur 14: eine sechste Ausführungsform eines Wärmetauschers;
- Figuren 15a-15b: ein Anschlussstück;
- Figuren 16a-16d: ein doppelwandiges Anschlussstück;
- Figuren 17a-17f: eine siebte Ausführungsform eines Wärmetauschers;
- Figuren 18a-18c: eine achte Ausführungsform eines Wärmetauschers;
- Figuren 19a-19b: eine neunte Ausführungsform eines Wärmetauschers, mit gebogenen Rohrabschnitten;
- Figur 20: exakt übereinander und versetzt übereinander angeordnete Rohre;
- Figur 21: ein Reinigungsgerät;
- Figur 22: ein Anschlussstück mit einer Umhüllung;
- Figur 23: eine Ablaufwanne mit einem Ablassventil;
- Figur 24: die Integration in eine bestehende Installation;
- Figur 25: eine Ausführungsform mit einer eben verlaufenden Dichtung;
- Figur 26: verschiedene Formen von Dichtungen;
- Figur 27: eine weitere Ausführungsform einer Wärmetauschereinheit, dazu eine weitere Ausführungsform eines Staudeckels;
- Figuren 28a-28d: Details des Staudeckels der Figur 27;
- Figuren 29a-29b: ein weiteres Anschlussstück;
- Figuren 30a-30b: Querschnitte durch dieses; und
- Figuren 31a-31b: Demontageelemente.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

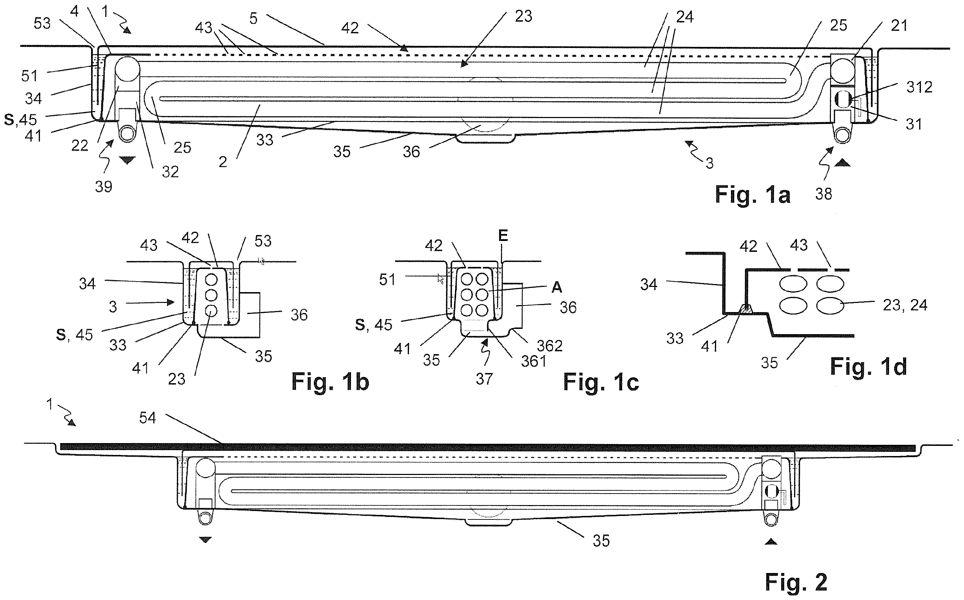

**Figuren 1a-1c** zeigen eine erste Ausführungsform eines Wärmetauschers in zwei Varianten in verschiedenen Schnittansichten. Der Wärmetauscher 1 weist gemäss der Variante der **Figur 1b** eine einzige Wärmetauschereinheit 2 auf, und in der Variante der **Figur 1c** zwei Wärmetauschereinheiten 2 auf. Letztere sind parallel geschaltet, das heisst, dass der Strom von Frischwasser auf die beiden Wärmetauschereinheiten 2 aufgeteilt wird. In beiden Varianten sind die eine oder die beiden Wärmetauschereinheiten 2 an einem ersten Anschlussstück 21 und einem zweiten Anschlussstück 22 angeschlossen (Anschlussstücke können allgemein auch als Sammelstücke bezeichnet werden). Das erste Anschlussstück 21 ist lösbar an einem ersten Anschlussstutzen 31 abgeschlossen. Das zweite Anschlussstück 22 ist lösbar an einem zweiten Anschlussstutzen 32 angeschlossen. Der oder die Wärmetauschereinheiten 2 sind in einer Ablaufwanne 3 oder einfach Wanne angeordnet, und die Anschlussstutzen 31, 32 führen durch einen Wannenboden 33. Durch den ersten Anschlussstutzen 31 und das erste Anschlussstück 21 werden die Wärmetauschereinheit(en) 2 mit Frischwasser versorgt, durch das zweite Anschlussstück 22 und den zweiten Anschlussstutzen 32 wird das Frischwasser aus der resp. den Wärmetauschereinheiten 2 direkt zu einem Verbraucher, beispielsweise einer Brause oder einem Wasserhahn, oder indirekt über eine Mischbatterie, einen Durchlauferhitzer oder einen Boiler etc. weiter geleitetet.

Das erste Anschlussstück 21 kann einen Absperrhahn 312 aufweisen. An den beiden Anschlussstücken 21, 22 oder den Anschlussstutzen 31, 32 kann je ein Temperatursensor 311, 321 zur Messung der Eintrittstemperatur und der Austrittstemperatur des Frischwassers angeordnet sein. Ein Durchflusssensor 322 kann zur Messung des Volumenstroms des Frischwassers angeordnet sein. Aus dem Durchfluss und den Temperaturen lässt sich die im Wärmetauscher rückgewonnene Energie berechnen. Alternativ können einzelne oder mehrere dieser Sensoren an respektive in Rohrabschnitten 24 angeordnet sein.

Eine Wärmetauschereinheit 2 weist jeweils mehrere, in der vorliegenden Ausführungsform sind es drei, vertikal übereinander angeordnete gerade Rohrabschnitte 24 auf. Bei einer ungeraden Anzahl von geraden Rohrabschnitten 24 liegen die beiden Anschlussstücke 21, 22 an entgegengesetzten Enden der Wärmetauschereinheit 2. Die geraden Rohrabschnitte 24 einer Wärmetauschereinheit 2 werden nacheinander vom Frischwasser durchflossen, wobei jeweils zwischen zwei aufeinander folgenden geraden Rohrabschnitten 24 ein Umlenkabschnitt 25 vorliegt. In der Ausführungsform der **Figur 1a** ist ein Durchmesser einer Biegung im Umlenkabschnitt 25 im Wesentlichen gleich einem Abstand der Rohre der geraden Rohrabschnitte 24. Insbesondere wenn die Rohre doppelwandig ausgeführt sind, können zur Erreichung eines derart kleinen Umlenkradius die Umlenkabschnitte nicht durch Biegung der Rohre erzeugt werden, sondern durch Verbinden der geraden Rohrabschnitte 24 mit separat hergestellten doppelwandigen Umlenkrohren.

Die Ablaufwanne 3 weist einen Wannenboden 33 mit einer Vertiefung 35 auf, sowie an den Wannenboden 33 anschliessende Wannenwände 34. Die Vertiefung 35 führt Abwasser zu einem Ablaufstutzen 36, der zum Anschluss an die Kanalisation vorgesehen ist. Wie in der **Figur 1c** gezeigt kann der Ablaufstutzen 36 eine von oben in den Ablaufstutzen 36 ragenden Wand oder Ablaufsperre 361 aufweisen, welche mit einer in Abflussrichtung nach der Ablaufsperre 361 angeordneten Erhöhung 362 im Ablauf einen weiteren Siphon oder Wannen-Geruchsverschluss 37 bildet. Ein solcher Wannen-Geruchsverschluss 37 kann auch in allen anderen Ausführungsformen realisiert sein.

Bezüglich der Vertiefung 35 kann der Wannenboden 33 als Schulter betrachtet werden. Auf dieser Schulter, also auf dem Wannenboden 33 in einem Bereich um die Vertiefung 35 herum, und insbesondere auf einem ebenen Bereich des Wannenbodens 33, liegt ein Stauelement 4 auf, welches ablaufendes Abwasser daran hindert, in die Vertiefung 35 abzulaufen, und dadurch auf eine Stauhöhe aufstaut. Es liegt also nur eine einzige Dichtebene an der Unterseite des Siphons vor.

Nach Überschreiten der Stauhöhe fliesst das Abwasser über ein Verteilelement 42. Das Verteilelement 42 weist Verteilöffnungen 43 auf, welche das Abwasser über die mindestens eine Wärmetauschereinheit 2 verteilen. Das Abwasser wird als oberhalb der geraden Rohrabschnitte 24 über diese verteilt und geleitet. Typischerweise sind die Verteilöffiungen 43 eine lineare Anordnung von Löchern im Verteilelement 42. Die Verteilöffnungen 43 können aber auch mehrere linear hintereinander angeordnete Schlitze oder ein einziger langer Schlitz pro Wärmetauschereinheit 2 sein.

Das Verteilelement 42 kann einstückig mit dem Stauelement 4 geformt sein. Beispielsweise ist das Stauelement 4 ein nach unten offener Behälter, dessen Seitenwände das Abwasser stauen, und dessen obere Fläche als Verteilelement 42 wirkt und mit den Verteilöffnungen 43 versehen ist.

Die unteren Ränder des Stauelements 4 können mit einer Dichtung 41 versehen sein, um das Stauelement 4 gegen den Wannenboden 33 abzudichten. Alternativ kann die Dichtung 41 am Wannenboden 33 befestigt sein und kann das Stauelement 4 auf die Dichtung 41 gelegt oder in eine Rille in der Dichtung 41 gesteckt sein, wie beispielsweise in der **Figur 1d** gezeigt.

Zwischen Stauelement 4 und Wannenwand 34 liegt eine Rinne 45 vor, insbesondere eine um das Stauelement 4 und die Wärmetauschereinheit 2 umlaufende Rinne.

Oberhalb des Stauelements 4 und des Verteilelements 42 ist ein Deckel 5 angeordnet. Der Deckel 5 ist ebenfalls ein nach unten offener Behälter. Seine Seitenwände, auch Deckelwand 51 oder Siphonwand genannt, ragen in den Bereich, in welchen das Abwasser durch das Stauelement 4 aufgestaut wird. Das Abwasser wird also gezwungen, aussen um den Deckel 5 und die Deckelwand 51 zu fliessen, und dann einwärts unter die Deckelwand 51 hindurch, und dann aufwärts die Seitenwände des Stauelements 4 entlang zum Verteilelement 42. Dadurch wird ein Siphon oder Geruchsverschluss gebildet, und zwar gleich zu Beginn des Abwasserstromes in den Wärmetauscher 1 hinein, und ohne dass gasdichte Abdichtungen (zwischen den Kanalgasen und der Umgebungsluft) erforderlich sind.

Die obere Fläche des Deckels 5 kann im Wesentlichen plan in der Ebene des Bodens einer Duschwanne angeordnet sein. Um den Deckel 5 herum entsteht zwischen dem Deckel 5 und einem oberen Rand der Ablaufwanne 3 ein schmaler Ablaufschlitz 53.

In allen Ausführungsformen sind in der Ablaufwanne 3 ein Einlaufbereich **E**, ein Siphonbereich **S** und ein Ablaufbereich **A** angeordnet, die im Betrieb des Wärmetauschers 1 nacheinander und in dieser Reihenfolge von Abwasser durchströmt werden.

**Figur 2** zeigt eine Variante der ersten Ausführungsform. Hier ist eine auf dem Deckel 5 angeordnete Abdeckung 54 in einer oder in zwei Richtungen breiter respektive länger gestaltet als das Stauelement 4 und die Wärmetauschereinheit(en) 2. Die Ablaufwanne, 3 oder ein die Ablaufwanne 3 umgebender Unterlagsboden weist einen Zuführungsbereich auf, der um die Abdeckung 54 herum ablaufendes Wasser in die Ablaufwanne 3 und damit in den Siphon führt. Damit ist es möglich, einen Wärmetauscher 1 in Standardgrössen herzustellen und mit Abdeckungen 54 unterschiedlicher Grösse die Länge des am Rand der Abdeckung gebildeten Ablaufschlitzes 53 an Duschen unterschiedlicher Grösse anzupassen.

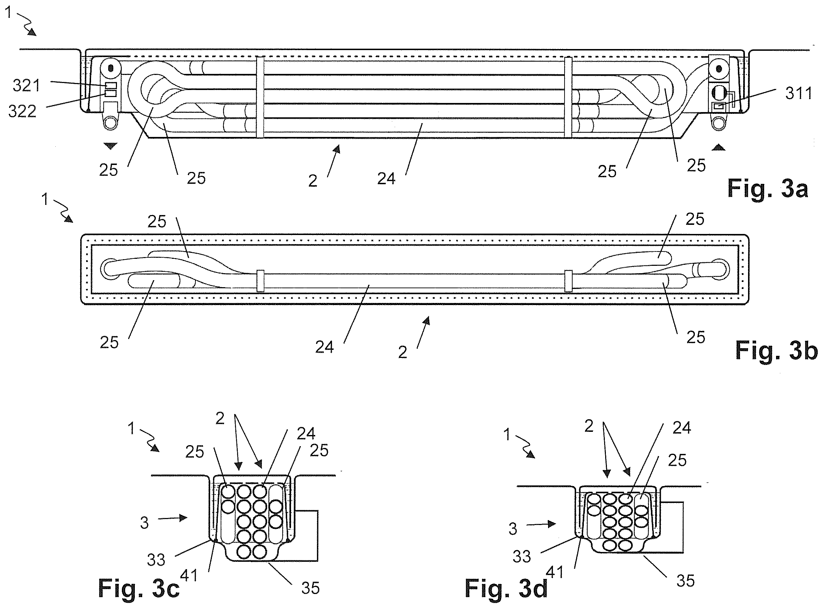

**Figuren 3a-3d** zeigen eine zweite Ausführungsform eines Wärmetauschers in verschiedenen Schnittansichten und Varianten. Die meisten Elemente sind funktional dieselben wie in den vorangehenden Figuren, die Beschreibung wird daher nicht wiederholt, sondern es werden nur die Unterschiede beschrieben: Die Umlenkabschnitte 25 weisen hier einen grösseren Durchmesser auf als der vertikale Abstand zwischen den geraden Rohrabschnitten 24 beträgt. Damit ist es möglich, die Rohrabschnitte 24 und die Umlenkabschnitt 25 aus denselben Rohren herzustellen.

Dies ist insbesondere dann der Fall, wenn die Rohre doppelwandig sind und der minimale Biegeradius dieser Rohre entsprechend gross ist.

Da im Bereich der Umlenkabschnitte 25 diese mehr Raum in der Vertikalen benötigen, und mehrere Umlenkabschnitte 25 vorliegen, sind in einer Wärmetauschereinheit 2 einzelne der Umlenkabschnitte 25 aus der Ebene der geraden Rohrabschnitte 24 herausgeführt. Einzelne der Umlenkabschnitte 25 verlaufen also mindestens abschnittsweise in einer Ebene parallel zu der Ebene der geraden Rohrabschnitte 24 und der anderen Umlenkabschnitte 25. Dies ist in der Aufsicht gemäss der **Figur 3b** sichtbar. Diese Figur zeigt eine einzige Wärmetauschereinheit 2.

Die **Figuren 3c** und **3d** zeigen zwei der Wärmetauschereinheiten 2 entsprechend den **Figuren 3a-3b** parallel zueinander in einer Ablaufwanne 3.

In der **Figur 3d** ist zudem eine Variante gezeigt, in welcher die Rohre zumindest in den geraden Rohrabschnitten 24 in der Vertikalen gestaucht sind. Dadurch erhalten sie beispielsweise einen ovalen oder ellipsenförmigen Querschnitt. Ihr Durchmesser in vertikaler Richtung ist also kleiner als in der horizontalen Richtung. Damit lässt sich eine Reduktion der Höhe der Wärmetauschereinheit 2 erreichen. Derart gestauchte Rohre sind natürlich in allen anderen beschriebenen Ausführungsformen einsetzbar und mit deren Merkmalen kombinierbar.

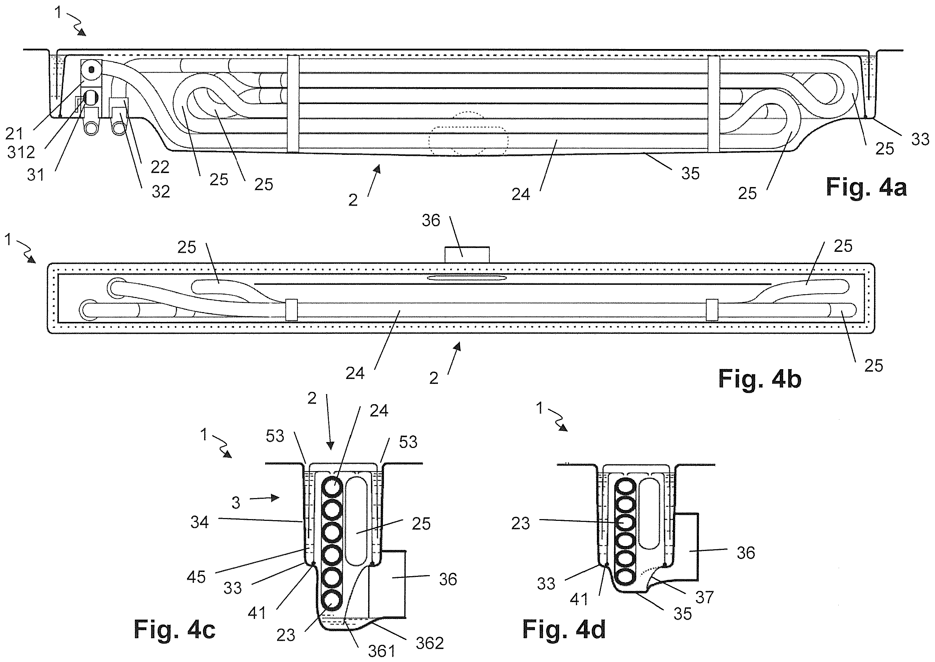

**Figuren 4a-4d** zeigen eine dritte Ausführungsform eines Wärmetauschers in verschiedenen Schnittansichten. Die meisten Elemente sind funktional dieselben wie in den vorangehenden Figuren, die Beschreibung wird daher nicht wiederholt, sondern es werden nur die Unterschiede beschrieben: Die gezeigte Wärmetauschereinheit 2 weist jeweils mehrere, in der vorliegenden Ausführungsform sind es sechs, vertikal übereinander angeordnete gerade Rohrabschnitte 24 auf. Bei einer geraden Anzahl von geraden Rohrabschnitten 24 liegen die beiden Anschlussstücke 21, 22 am gleichen Ende der Wärmetauschereinheit 2. Wie bei der zweiten Ausführungsform weisen die Umlenkabschnitte 25 einen grösseren Durchmesser auf als der vertikale Abstand zwischen den geraden Rohrabschnitten 24 beträgt, und sind einzelne der Umlenkabschnitte 25 aus der Ebene der geraden Rohrabschnitte 24 herausgeführt. Die **Figur 4a** zeigt eine einzige Wärmetauschereinheit 2, in einer Variante der Ausführungsform sind zwei Wärmetauschereinheiten 2 parallel zueinander angeordnet, analog zur Ausführungsform der **Figuren 3b** oder **3c****.**

**Figur 4d** zeigt nebst den bereits beschriebenen gestauchten Rohren 23 einen mechanischen Wannen-Geruchsverschluss 37. Dieser verschliesst den Ablaufstutzen 36 gegen die Kanalisation hin. Er kann manuell bedienbar sein, oder er kann mechanisch mit dem Stauelement 4 gekoppelt sein, so dass beim Anheben oder Entfernen des Stauelements 4 der Wannen-Geruchsverschluss 37 verschlossen wird.

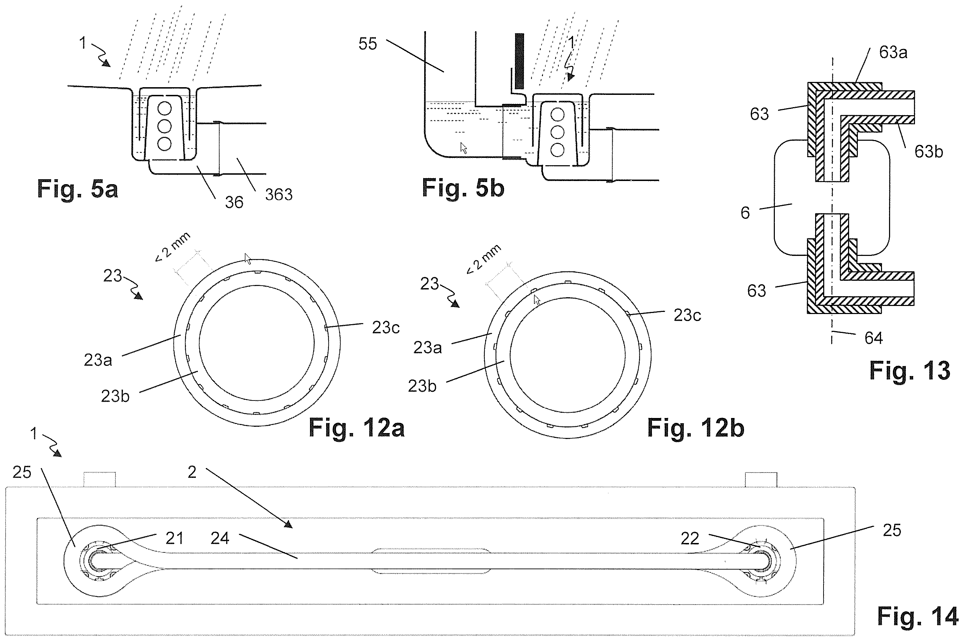

**Figuren 5a-5b** zeigen die hauptsächlichen Einbauvarianten von Wärmetauschern: **Figur 5a** zeigt schematisch den bereits beschriebenen Einbau in eine Ablaufrinne einer Duschwanne und den Anschluss des Ablaufstutzens 36 an ein Ablaufrohr 363 zur Kanalisation. **Figur 5b** zeigt eine Kombination mit einem weiteren Ablauf 55, beispielsweise aus einer Badewanne. Der weitere Ablauf 55 führt dabei von aussen die Ablaufwanne 3 und zwar in deren Siphonbereich, also in einem Bereich ausserhalb des Stauelements 4. Das durch den weiteren Ablauf 55 zugeführte Abwasser wird also ebenfalls durch den Siphon auf das Verteilelement 42 geführt.

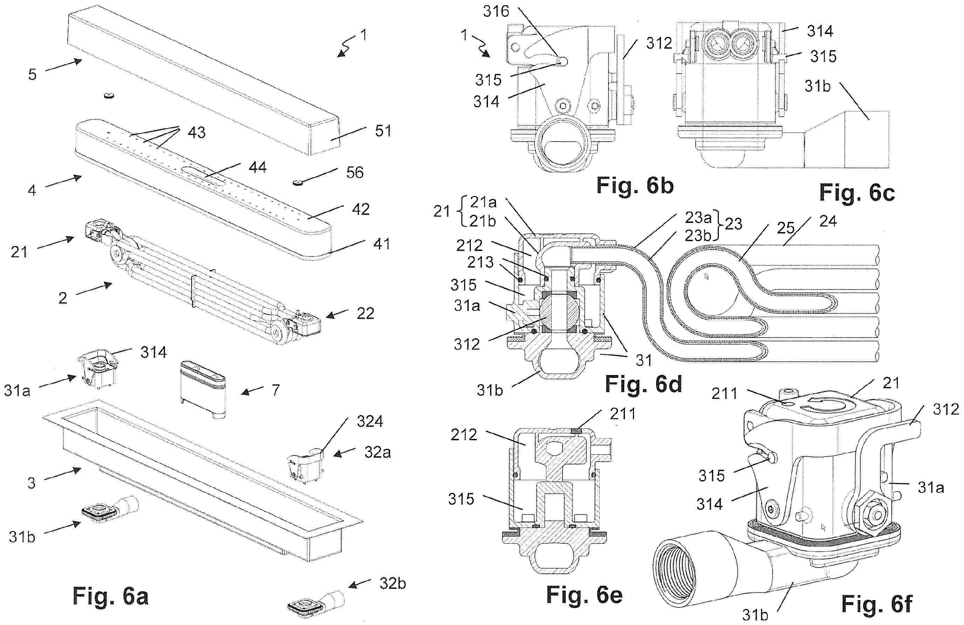

**Figuren 6a-6m** zeigen eine vierte Ausführungsform eines Wärmetauschers in verschiedenen Schnitten und Ansichten. Die meisten Elemente sind funktional dieselben wie in den vorangehenden Figuren, die Beschreibung wird daher nicht vollständig wiederholt, sondern es werden vor allem die Unterschiede beschrieben: Hier weist der Wärmetauscher 1 zwei parallel geschaltete Wärmetauschereinheiten 2 auf, welche an gegenüberliegenden Enden an einem ersten Anschlussstück 21 und einem zweiten Anschlussstück 22 angeschlossen sind.

Die beiden Anschlussstutzen 31, 32 sind zweiteilig ausgeführt: jeweils ein oberer Teil 31a, 32a und ein unterer Teil 31b, 32b sind miteinander verbunden, insbesondere lösbar verbunden. Der obere Teil 31a, 32a befindet sich im Wesentlichen innerhalb der Ablaufwanne 3 und kann doppelwandig ausgeführt sein, der untere Teil 31b, 32b befindet sich im Wesentlichen ausserhalb der Ablaufwanne 3 und ist in der Regel nicht doppelwandig. Der untere Teil 31b, 32b kann in verschiedenen Orientierungen mit dem entsprechenden oberen Teil 31a, 32a verbunden werden, die beispielsweise jeweils um 90° oder 180° gegeneinander versetzt sind. Damit kann die Orientierung der Anschlüsse den Gegebenheiten beim Einbau angepasst werden.

Vor allem die **Figuren 6b** und **6f** zeigen: Die Anschlussstücken 21, 22 sind mittels Verschlussbügeln 314, 324 an den Anschlussstutzen 31, 32 lösbar montiert. Zum Verbinden beispielsweise des ersten Anschlussstücks 21 mit dem ersten Anschlussstutzen 31 wird der erste Verschlussbügel 314 zur Seite geschwenkt und das erste Anschlussstücke 21 auf den ersten Anschlussstutzen 31 gelegt. Beim Schliessen eines Verschlussbügels 314 erfasst dieser mit einer oberen Steuerfläche einen Teil (oder Andrückelement) 315 des ersten Anschlussstücks 21 und drückt damit das erste Anschlussstück 21 gegen den ersten Anschlussstutzen 31. In einer Endposition des Verschlussbügels 314 rastet dieser vorzugsweise ein. Damit wird das erste Anschlussstücke 21 sicher gegen den erste Anschlussstutzen 31 gepresst und kann eine flüssigkeitsdichte Verbindung realisiert werden.

Beim Öffnen des Verschlussbügels 314 drückt dieser mit einer unteren Steuerfläche das erste Anschlussstück 21 vom ersten Anschlussstutzen 31 weg. Dabei wird eine eventuell eingeschnappte oder eingerastete Verbindung, beispielsweise eine Verbindung mit O-Ringen 213, behutsam gelöst.

Die obere Bügelfläche weist als Verriegelungselement eine Unstetigkeit oder eine Biegung 315 auf, welche, wenn die Wärmetauschereinheit 2 unter Druck steht und das erste Anschlussstück 21 nach oben gedrückt wird, ein Öffnen des Verschlussbügels 314 erschwert oder blockiert.

Der Absperrhahn 312 weist ein Ventil, beispielsweise ein Kugelventil auf, und ein Betätigungselement, hier ein Hebel. Dieser Absperrhebel ist so geformt und angeordnet, dass der Verschlussbügel 314 in seiner geschlossenen Stellung blockiert ist, solange der Absperrhahn 312 offen ist. Der Verschlussbügel 314 kann nur geöffnet werden, wenn der Absperrhebel in die Stellung gedreht ist, in welcher der Absperrhahn 312 geschlossen ist.

In anderen Ausführungsformen liegen keine Verschlussbügel vor, sondern sind die Anschlussstücken 21, 22 beispielsweise mit Schrauben auf die Anschlussstutzen 31, 32 befestigt. Zur Demontage einer Wärmetauschereinheit 2 werden dann diese Schrauben gelöst.

Die **Figuren 6d** und **6e** zeigen: Die geraden Rohrabschnitte 24 und die Anschlussstücke 21, 22 sind doppelwandig ausgeführt. Ebenso sind die Anschlussstutzen 31, 32 doppelwandig ausgeführt. Ein Zwischenraum 212 eines ersten Anschlussstücks 21 ist dabei mit einem Zwischenraum 315 des ersten Anschlussstutzens 31 verbunden. Zur Abdichtung der Frischwasserleitung und der Zwischenräume sind O-Ringe 213 konzentrisch zwischen dem ersten Anschlussstück 21 und dem ersten Anschlussstutzen 31 angeordnet. Das doppelwandige Rohr 23 ist mit einem äusseren Rohr 23a an einem äusseren Teil 21a des ersten Anschlussstücks 21 verbunden und mit einem inneren Rohr 23b mit einem inneren Teil 21b des ersten Anschlussstücks 21. Ein Zwischenraum des Rohrs 23 (in der Figur nicht sichtbar) ist mit dem Zwischenraum 212 des ersten Anschlussstücks 21 verbunden. Der äussere und der innere Teil 21a, 21b des ersten Anschlussstücks 21 sind durch Stege miteinander verbunden. Die Stege haben beispielsweise eine Dicke von weniger als 2 Millimetern, entsprechend gesetzlichen Vorschriften über Wärmetauscher im Trinkwasserbereich.

Eine Sichtöffnung 211 beispielsweise aus einem durchsichtigen Kunststoff oder Glas gibt einen Einblick in den Zwischenraum 212 und erlaubt festzustellen, ob sich Flüssigkeit im Zwischenraum 212 befindet.

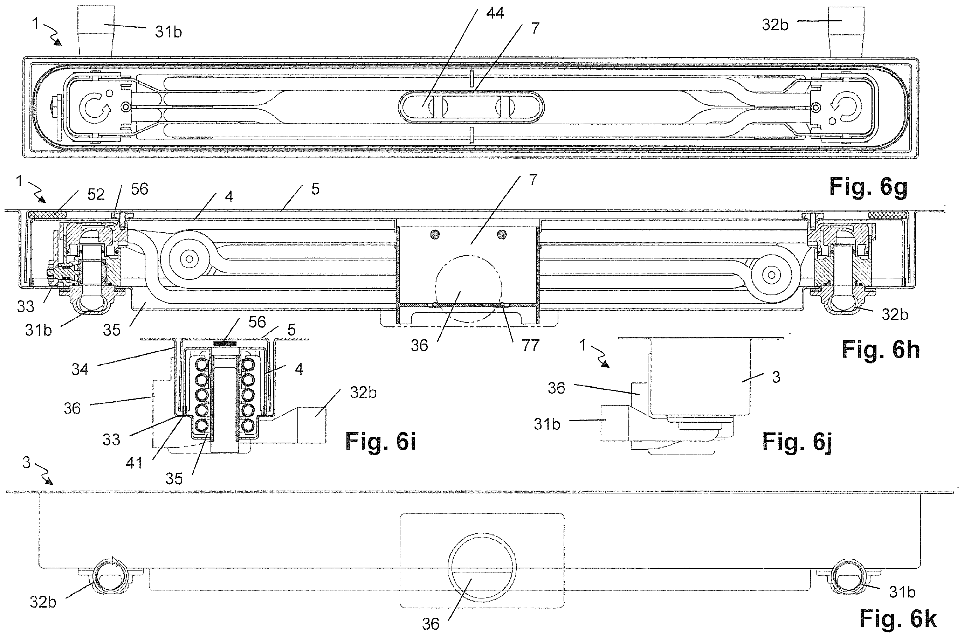

Die **Figuren 6g** und **6h** zeigen neben den bereits beschriebenen Elementen einen Stöpsel 7 zum wahlweisen Verschliessen des Ablaufs oder des Ablaufstutzens 36 selber. Die Wärmetauschereinheiten 2 sind so angeordnet, dass zwischen ihnen ein Spalt bleibt, in welchem der Stöpsel 7 angeordnet ist, der Stöpsel 7 ist von Hand betätigbar und kann in mindestens zwei verschiedenen Stellungen stehen. In einer ersten Stellung, welche für den Betrieb des Wärmetauschers 1 vorgesehen ist, gibt der Stöpsel 7 den Ablauf frei. In einer zweiten Stellung, welche für eine chemische Reinigung des Wärmetauschers 1 vorgesehen ist, verschliesst der Stöpsel 7 den Ablauf. In diesem Fall kann die Ablaufwanne 3 mit Wasser gefüllt werden. Ein Reinigungs- und/oder Entkalkungsmittel kann dem Wasser zugegeben werden und einwirken.

In beiden Stellungen kann der Stöpsel 7 als Überlauf wirken, d.h. dass Wasser, welches über einen oberen Rand des Stöpsels 7 fliesst, durch den Stöpsel 7 hindurch zum Ablauf fliesst. Im Betrieb des Wärmetauschers 1 fliesst das Wasser in diesem Fall zuerst durch die Überlauföffnung 44 des Verteilelements 42 und dann durch den Stöpsel 7. Im Stöpsel 7 können Einwegventile, beispielsweise Membranventile 77 angeordnet sein, die das Ablaufen von Wasser erlauben, aber ein Aufsteigen von Kanalgasen verhindern. Dies ist vor nur bei der Reinigung relevant, denn im Betrieb ist der Ablauf ohnehin offen und werden die Kanalgase durch den Siphon zurückgehalten.

In einer Ausführungsform ist der Stöpsel 7 in der zweiten Stellung (also bei geschlossenem Ablauf) höher als in der ersten. Dann kann beim Montieren des Stauelements 4 respektive des Verteilelements 42 dieses den Stöpsel 7 nach unten drücken, wodurch der Ablauf geöffnet wird. Damit wird verhindert, dass der Ablauf irrtümlicherweise geschlossen bleibt. Allgemein gesprochen bewegt also beim Montieren das Stauelement 4 den Stöpsel 7 in eine geöffnete Stellung.

Rändelschrauben dienen als Befestigungselemente 56, um das Stauelement 4 entgegen einer Auftriebswirkung nach unten zu halten, und um eine sichere Abdichtung mittels der Dichtung 41 bezüglich des Wannenbodens 33 zu erreichen. Diese Befestigungselemente können an den beiden Anschlussstücken 21, 31 befestigbar sein.

Die Befestigungselemente 56 können gegen eine Feder wirken oder selber so gestaltet sein, dass beim Lösen der Befestigungselemente 56 das Stauelement 4 ein wenig angehoben wird, beispielsweise um ein paar Millimeter. Dadurch wird die Rinne 45 entleert und kann zur Reinigung durchgespült werden.

Der Deckel 5 kann eine oder mehrere verschliessbare Öffnungen aufweisen. Dadurch kann das folgende Verfahren zur Reinigung der Wärmetauschereinheit 2 realisiert werden: Durch diese Öffnungen wird ein Reinigungsmittel in Schaumform unter das Stauelement 4 gespritzt. Nach einer Einwirkungszeit wird der Schaum zusammen mit gelösten Verunreinigungen weggespült. Weil es als Schaum vorliegt, fliesst das Reinigungsmittel nicht durch den Ablaufstutzen 36 ab sondern kann während der ganzen Einwirkungszeit auf die Rohre 23 und anderen Elemente der Wärmetauschereinheit 2 einwirken. Das Verfahren eignet sich insbesondere zur Entfernung eines Biofilms.

Distanzelemente oder Stützelemente 52 können den Deckel 5 auf dem Stauelement 4 respektive dem Verteilelement 42 abstützen.

**Figur 6i** zeigt eine Querschnittsansicht auf die kurze Seite des Wärmetauschers 1.

Die **Figuren 6j** und **6k** zeigen je eine seitlichen Ansicht des Wärmetauschers 1, sichtbar von aussen sind dabei nur die Ablaufwanne 3, die äusseren Teile der Anschlussstutzen sowie der Ablaufstutzen 36.

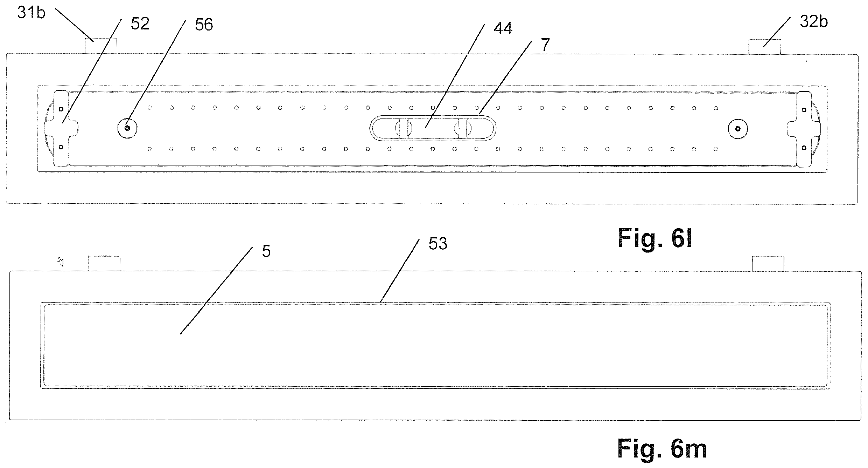

**Figur 6l** zeigt eine Aufsicht auf einen Wärmetauscher 1 mit entferntem Deckel 5.

**Figur 6m** zeigt eine Aufsicht auf einen Wärmetauscher 1 mit eingesetztem Deckel 5.

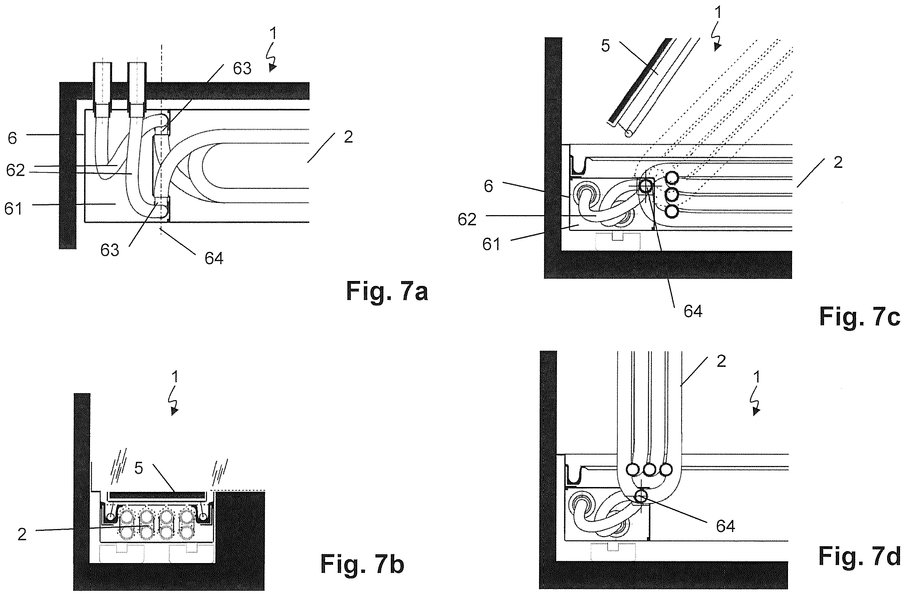

**Figuren 7a-7d** zeigen eine fünfte Ausführungsform eines Wärmetauschers in einer Schnittansicht von oben (**Figur 7a**), zwei seitlichen Schnittansichten auf die Längsseite (**Figuren 7c** und **7d**) mit teilweise und ganz herausgeschwenkter Wärmetauschereinheit 2 und einer seitlichen Schnittansicht auf die Schmalseite (**Figur 7b**). Hier ist eine Wärmetauschereinheit 2 mit einer Rohrwendel drehbar respektive schwenkbar angeordnet. Der Schwenkmechanismus ist natürlich auch für Wärmetauschereinheiten 2 oder Paare von Wärmetauschereinheiten 2 wie in den anderen Ausführungsformen realisierbar. Der Wärmetauscher 1 weist eine Anschlusseinheit 6 auf, welche bezüglich der übrigen Ablaufwanne, 3 wasserdicht ist. Die Frischwasserzufuhr und Frischwasserableitung führt von ausserhalb der Ablaufwanne 3 in die Anschlusseinheit 6 hinein und in einem Innenbereich 61 der Anschlusseinheit 6 durch flexible Leitungen 62 durch zwei drehbaren Anschlüsse 63 in die Wärmetauschereinheit 2. Die beiden drehbaren Anschlüsse 63 sind um eine gemeinsame Schwenkachse 64 drehend angeordnet.

Die Rohre der Wärmetauschereinheit 2 können doppelwandig ausgeführt sein. Ein Zwischenraum 23c der Rohre (siehe dazu **Figuren 12a** und **12b**) ist dann mit dem Innenbereich 61 in Verbindung, so dass eindringendes Leckwasser in den Innenbereich 61 gelangt und sichtbar wird, beispielsweise durch eine Kontrollöffnung oder ein Sichtfenster. Das Leckwasser kann direkt sichtbar werden, oder es kann ein bewegliches Indikatorelement, beispielsweise einen Schwimmer, verschieben oder bewegen, so dass bei Vorhandensein von Leckwasser dieses Indikatorelement durch die Kontrollöffnung oder das Sichtfenster sichtbar wird.

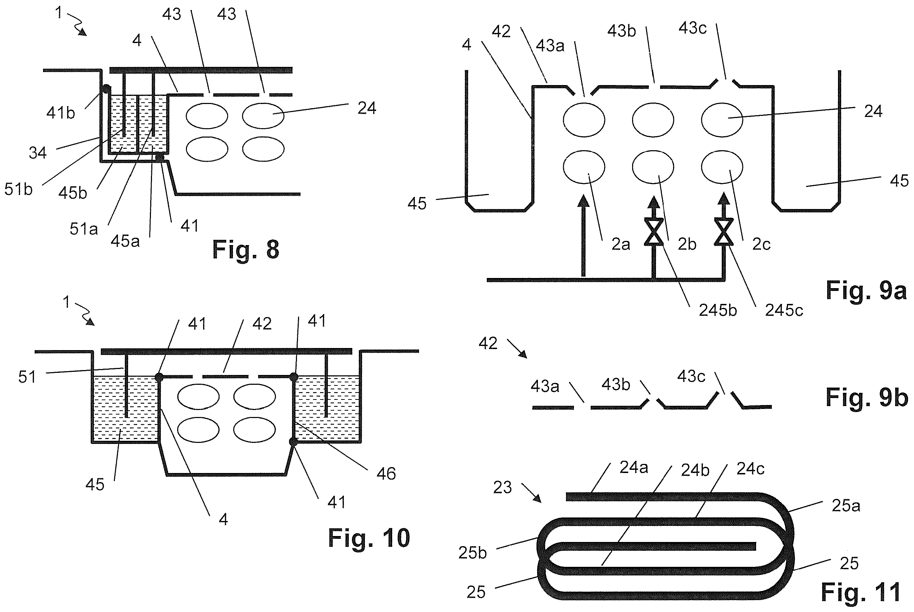

**Figur 8** zeigt einen mehrstufigen Siphon. Ein solcher mehrstufiger Siphon ist mit sämtlichen Ausführungsformen kombinierbar und auch selbständig in anderen Anwendung realisiert werden. Der Deckel 5 weist nicht nur einen sondern zwei Deckelränder 51a, 51b auf. Diese sind ineinander angeordnet, also quasi konzentrisch zueinander. Das Stauelement 4 weist mindestens eine umlaufende und nach oben offene erste oder innere Rinne 45a auf. Ein innerer Deckelrand 51a verläuft innerhalb der ersten Rinne 45a. Ein äusserer Deckelrand 51b verläuft ausserhalb der ersten Rinne 45a. Ablaufendes Abwasser fliesst somit unter den äusseren Deckelrand 51b, über den Rand der ersten Rinne 45a, unter den inneren Deckelrand 51a und über das Stauelement 4. Eine Dichtung 41 kann die erste Rinne 45a bezüglich der Ablaufwanne 3 abdichten.

Eine weitere oder äussere Rinne 45b ist also zwischen der inneren Rinne 45a und der Wannenwand 34 gebildet. Alternativ kann, wie in der Figur 8 gezeigt, auch die äussere Rinne 45b Teil des Stauelements 4 sein, respektive mit der ersten Rinne 45a verbunden oder gemeinsam geformt sein. Eine Dichtung kann dann auch an der mit 41b bezeichneten Stelle vorliegen.

**Figur 9a** zeigt einen Querschnitt durch ein Verteilelement 42 mit verschiedenartigen Verteilöffnungen 43. Eine Gruppe von ersten Verteilöffnungen 43a ist über einer ersten Wärmetauschereinheit 2a angeordnet, eine Gruppe von zweiten Verteilöffnungen 43b ist über einer zweiten Wärmetauschereinheit 2b angeordnet. Optional kann eine Gruppe von dritten Verteilöffnungen 43c über einer dritten Wärmetauschereinheit 2c angeordnet sein. Die ersten Verteilöffnungen 43a liegen in Vertiefungen und werden daher vor den zweiten Verteilöffnungen 43b durchströmt.

Die zweiten Verteilöffnungen 43b weisen keinen oder einen nur leicht erhöhten Rand auf und werden im Wesentlichen erst durchströmt, wenn der Strom des Abwassers eine erste Schwelle überschreitet und so gross ist, dass er nicht mehr durch die ersten Verteilöffnungen 43a aufgenommen wird. Analog weisen die dritten Verteilöffnungen 43c einen erhöhten Rand auf, und werden entsprechend erst durchströmt, wenn der Abwasserstrom eine noch höhere Schwelle überschreitet.

Die Versorgung der Wärmetauschereinheiten ist schematisch dargestellt: Die erste Wärmetauschereinheit 2a ist immer durchströmt, die zweite Wärmetauschereinheit 2b wird durch ein erstes druckgesteuertes Ventil 245b gespeist und nur dann gespeist, wenn der Volumenstrom des Frischwassers und damit auch ein Druck am Eingang des Ventils 245 einen Schwellwert überschreitet. Optional wird analog die optionale dritte Wärmetauschereinheit 2c durch ein zweites druckgesteuertes Ventil 245c gespeist und nur dann gespeist, wenn der Volumenstrom des Frischwassers einen weiteren, höheren Schwellwert überschreitet.

Eine alternative Form der Verteilöffnungen 43 ist in der **Figur 9b** schematisch an einem Ausschnitt, der nur das Verteilelement 42 zeigt, dargestellt. Die ersten Verteilöffnungen 43a weisen keinen Rand auf. Die zweiten Verteilöffnungen 43b weisen einen erhöhten Rand auf und werden daher erst durchströmt, wenn der Strom des Abwassers so gross ist, dass er nicht mehr vollständig durch die ersten Verteilöffnungen 43a aufgenommen wird. Analog weisen die dritten Verteilöffnungen 43c einen noch weiter erhöhten Rand auf, und werden entsprechend erst durchströmt, wenn der Abwasserstrom eine noch höhere Schwelle überschreitet.

Zusätzlich können auch Verteilöffnungen vorliegen, die erst bei einem noch höheren Volumenstrom durchströmt werden, beispielsweise mit noch weiter erhöhten Rändern als die zweiten Verteilöffnungen 43b, und entsprechend ist eine weitere Wärmetauschereinheit 2 durch ein weiteres druckgesteuertes Ventil gespeist, welches erst bei einem noch höheren weiteren Druckschwellwert anspricht.

Anstelle von druckgesteuerten Ventilen kann auch ein Durchflussmesser eingesetzt werden, und gesteuerte Ventile (beispielsweise elektrisch, hydraulisch, mechanisch etc.), die beim Überschreiten eines entsprechenden Schwellwerts geöffnet werden und beim Unterschreiten eines anderen Schwellwertes geschlossen werden.

**Figur 9a** zeigt zudem, ähnlich wie in der Figur 8, dass eine einzelne umlaufende Rinne 45 für den Siphon auch am Stauelement 4 ausgebildet sein kann. Beim Herausnehmen des Stauelements 4 kann der Inhalt der Rinne 45 in die Ablaufwanne 3 ausgeleert werden. Diese Variante des Stauelements 4 kann mit den anderen beschriebenen Ausführungsformen kombiniert werden. Natürlich können aber die verschiedenen Gruppen von Verteilöffnungen 43 auch mit einem Stauelement 4 ohne daran ausgebildete Rinne 45 realisiert werden, wie in den anderen Ausführungsformen.

**Figur 10** zeigt eine umlaufende Rinne 45, die gebildet wird indem das Stauelement 4 an der Ablaufwanne 3 angeformt oder fest mit dieser verbunden ist. Dann ist das Verteilelement 42 auf das Stauelement 4 aufgesetzt, also vom Stauelement 4 zur Reinigung des Wärmetauschers 1 entfernbar. Es können Dichtungen 41 zwischen dem Stauelement 4 und dem Verteilelement 42 angeordnet sein. Damit die Rinne 45 zur Reinigung entleert werden kann, kann ein herausnehmbarer Teil 46 des Stauelements 4 vorliegen, und optional mit einer weiteren Dichtung 41 am Wannenboden 33 und am Stauelement 4 abgedichtet sein. Das Verteilelement 42 kann am Deckel 5 befestigt sein, beispielsweise mit einer einfachen, rein manuell respektive werkzeugfrei lösbaren Verbindung. Beim Abheben des Deckels 5 wird dann das Verteilelement 42 mit abgehoben, was die Demontage einfacher macht.

**Figur 11** zeigt schematisch einen möglichen Verlauf eines Rohrs 23 einer Wärmetauschereinheit 2. Auch hier liegt, *entlang* der Wärmetauscherrohre (respektive entlang der Strömung *durch* die Rohre) gesehen zwischen einem ersten geraden Rohrabschnitt 24a und einem zweiten geraden Rohrabschnitt 24b kein weiterer horizontal verlaufender gerader Rohrabschnitt, sondern nur ein erster Umlenkabschnitt 25a. Jedoch sind *in der Vertikalen* (entlang der Strömung *über* die Rohre) gesehen, die beiden beschriebenen geraden Rohrabschnitte 24a, 24b *nicht* aufeinanderfolgend. Stattdessen ist in der Vertikalen eine andere Folge realisiert: beispielsweise indem ein dritter gerader Rohrabschnitt 24c, welcher entlang der Rohre gesehen (nach einem zweiten Umlenkabschnitt 25b) auf den zweiten geraden Rohrabschnitt 24b folgt, in vertikaler Richtung zwischen dem ersten geraden Rohrabschnitt 24a und dem zweiten geraden Rohrabschnitt 24c angeordnet. In den Bereichen, wo sich in der Figur die Umlenkabschnitte 25, 25a, 25b überschneidet, sind sie in entgegengesetzte Richtungen aus der Ebene der geraden Rohrabschnitte 24a, 24b, 24c heraus gebogen, um einander auszuweichen.

**Figuren 12a-12b** zeigen doppelwandige Rohre 23 mit jeweils einem Aussenrohr 23a und einem Innenrohr 23b und Zwischenräumen 23c. In der Ausführungsform der **Figur 12a** sind die Zwischenräume am Innenrohr 23b geformt, in der Ausführungsform der **Figur 12b** analog am Aussenrohr 23a. Die Zwischenräume können dabei durch Kerben oder Nuten oder Rändeln geformt sein. Alternativ können auch vorstehende Rippen an einem der Rohre geformt sein. Die Rippen können an der Innenseite des Innenrohres 23b ausgebildet sein. Sie können einen Drall aufweisen. Dadurch kann der Wärmeübergang zwischen dem im Rohr fliessenden Medium, hier Frischwasser, und dem Innenrohr 23b verbessert werden. Wenn, so wie in der Figur 12b, die Zwischenräume am Aussenrohr 23a ausgebildet sind, so ist die Abdichtung des Innenrohrs 23b in einem Anschlussstück einfacher zu realisieren, beispielsweise wenn dazu Dichtungsringe verwendet werden. Anstelle von Rippen oder zusätzlich können in den Rohrabschnitten Strömungshindernisse angeordnet sein, welche Turbulenzen erzeugen und dadurch den Wärmeübergang zum Innenrohr verbessern.

**Figur 13** zeigt eine Anschlusseinheit 6 mit schwenkbaren Elementen oder drehbaren Anschlüsse 63 in einer schematischen Aufsicht. Die drehbaren Anschlüsse 63 sind hier gewinkelte Rohrstutzen. Innerhalb der Anschlusseinheit 6 sind die Anschlüsse 63 mit einer Frischwasserzufuhr respektive Frischwasserableitung verbunden (nicht eingezeichnet. Ausserhalb der Anschlusseinheit 6 sind die Anschlüsse 63 an die mindestens eine Wärmetauschereinheit 2 angeschlossen. Die beiden drehbaren Anschlüsse 63 sind um eine gemeinsame Schwenkachse 64 drehend angeordnet. Eine Abdichtung der drehbaren Anschlüsse 63 kann erfolgen, indem diese in konzentrischen Dichtungen gelagert sind.

Die drehbaren Anschlüsse 63 können einwandig, oder wie hier gezeigt, doppelwandig ausgeführt sein, mit äusseren Rohrwänden 63a und inneren Rohrwänden 63b und dazwischen liegenden Zwischenräumen (nicht eingezeichnet, aber beispielsweise wie in den Figuren 12a oder 12b ausgeführt). Die Zwischenräume der drehbaren Anschlüsse 63 sind mit den Zwischenräumen 23c der angeschlossenen Rohre und mit Zwischenräumen der Anschlusseinheit 6 verbunden. Der innere Aufbau einer doppelwandigen Anschlusseinheit 6 kann analog zu dem Aufbau der doppelwandigen Anschlussstücke sein.

**Figur 14** zeigt eine sechste Ausführungsform eines Wärmetauschers. Hier verlaufen die Umlenkabschnitte 25 jeweils in einer horizontalen oder einer geneigten Ebene, und alle geraden Rohrabschnitte 24 der Wärmetauschereinheit 2 sind übereinander angeordnet, vertikal in einer einzigen Ebene (also nicht in zwei oder mehr Ebenen). Die Umlenkabschnitte 25 führen jeweils im Bereich der Anschlussstücke 21, 22 um die Anschlussstücke 21, 22 herum.

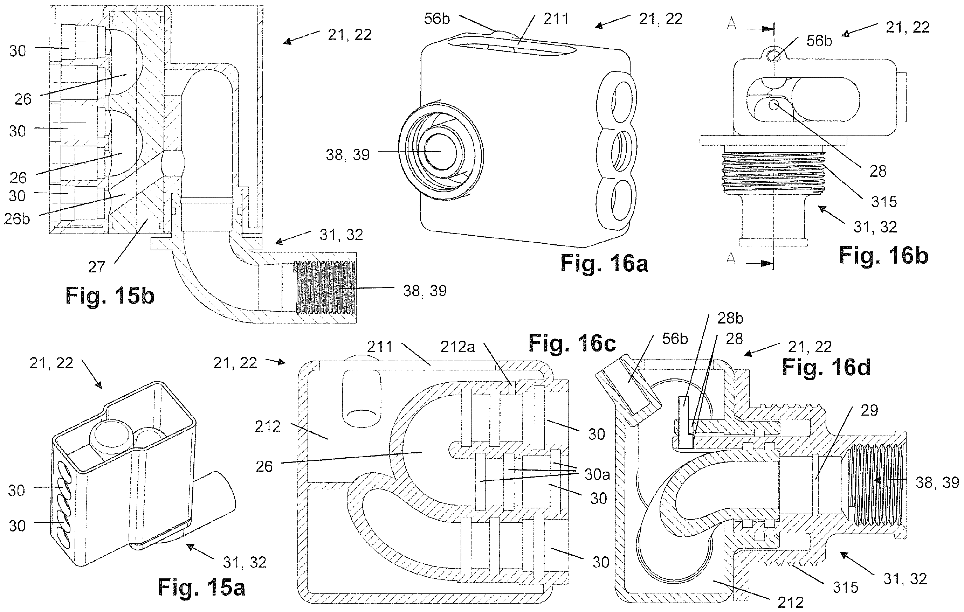

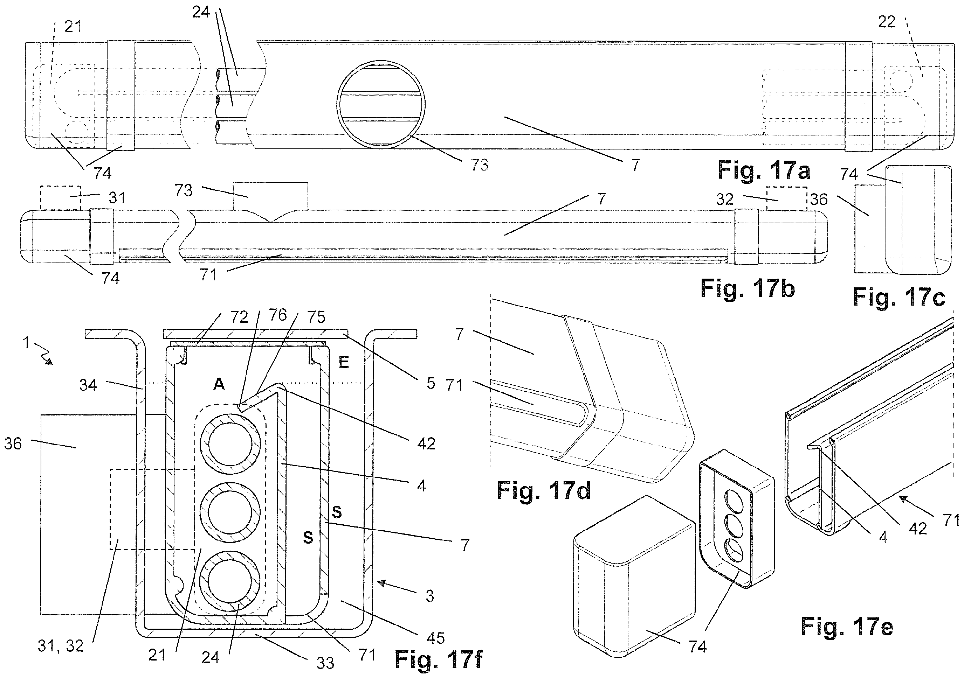

**Figuren 15a-15b** zeigen ein Anschlussstück 21, 22 mit integrierten Umlenkelementen 26. Diese Umlenkelemente treten an die Stelle von Umlenkabschnitten, die am Rohr ausgestaltet sind. Die Umlenkelemente 26 sind als hohle Bereiche im Anschlussstück ausgebildet. Rohrabschnitte, insbesondere horizontale Rohrabschnitte, können jeweils in Rohreinführungen 30 der Anschlussstücke 21, 22 eingesetzt und abgedichtet werden. Das in den **Figuren 15a-****15b** gezeigte Anschlussstück 21, 22 ist einwandig. Mit einem Deckel oder einer zusätzlichen Umhüllung oder Haube 74 (hier nicht dargestellt, siehe **Figuren 17a-****17e**) aus demselben oder einem anderen Material, beispielsweise aus Silikon, kann daraus ein zweiwandiges Anschlussstück gebildet werden. Das Anschlussstück kann mit einer verlorenen Form aus Kunststoff oder Metall einstückig gegossen oder gespritzt werden, oder es kann wie gezeigt mehrteilig sein, mit einem Umlenkeinsatz 27, welcher in das verbleibende Anschlussstück einschiebbar ist, so dass beide Teile in einem Giessverfahren ohne verlorene Form herstellbar sind. Der Umlenkeinsatz 27 kann in zwei Positionen einschiebbar sein. In einer ersten Position (wie gezeichnet) verbindet ein Übergangskanal 26b des Umlenkeinsatzes 27 eine unterste Rohreinführung 30 mit einer Frischwasserzufuhr respektive Frischwasserableitung durch einen Anschlussstutzen 31, 32 und verbinden Umlenkelemente 26 die verbleibenden, darüber liegenden Rohreinführungen 30 jeweils paarweise miteinander. In einer zweiten, umgekehrten Position (nicht gezeichnet) verbindet der Übergangskanal 26b des Umlenkeinsatzes 27 eine oberste Rohreinführung 30 mit einem Anschlussstutzen 31, 32 und verbinden Umlenkelemente 26 die verbleibenden, darunter liegenden Rohreinführungen 30 jeweils paarweise miteinander. Das Anschlussstück ist für fünf horizontale Rohrabschnitte 24 vorgesehen, kann aber in analoger Weise auch für drei oder eine andere, insbesondere ungerade Anzahl von Rohrabschnitten 24 gebildet sein.

**Figuren 16a-16d** zeigen ein doppelwandiges Anschlussstück 21, 22. Die Rohreinführungen 30 sind entsprechend zur Aufnahme von doppelwandigen Rohrabschnitten 24 vorgesehen. Dazu können sie Nuten 30a zur Aufnahme von Dichtungsringen zu jeweils einem Aussenrohr 23a und einem Innenrohr 23b aufweisen. Ein Zwischenraum 23c eines eingesteckten Rohrs 23 (siehe **Figur 12a** oder **12b**) ist über Verbindungslöcher 212a mit dem Zwischenraum 212 des Anschlussstücks 21, 22 verbunden. Das Anschlussstück kann mit einer verlorenen Form aus Kunststoff oder Metall gegossen oder gespritzt werden. Das Anschlussstück kann auch nur einwandig hergestellt werden, beispielsweise aus Metall, und mit einer Umhüllung beispielsweise aus Kunststoff, insbesondere Silikon, versehen werden.

Eine Aufnahme 56b für Befestigungselemente erlaubt beispielsweise die Aufnahme einer Schraube oder eines Bajonettverschlusselementes zur Befestigung eines oder mehrerer weiterer Elemente, beispielsweise eines Stauelementes, einer Stauwanne oder eines Staudeckels.

Das Anschlussstück 21, 22 mit einen Anschlussstutzen 31, 32 verbindbar, insbesondere in diesen einsteckbar, wobei Nuten zur Aufnahme von Dichtungsringen am Anschlussstück 21, 22 oder am Anschlussstutzen 31, 32 vorliegen können. Ein Abschnitt des Anschlussstutzens 31, 32 ragt in das Anschlussstück 21, 22 hinein, wobei Fixierungslöcher 28 der beiden miteinander fluchten, so dass ein Stift 28b als Fixierungselement durch die Fixierungslöcher 28 gesteckt werden kann, wodurch das Anschlussstück 21, 22 vor dem Herausziehen gesichert ist. Wie hier gezeigt liegen im montierten Zustand die Fixierungslöcher 28 im Innern der Anschlussstücke 21, 22, was zu einem platzsparenden und einfach zu reinigendem Aufbau führt - im Gegensatz zu Fixierungselementen, die ausserhalb der Anschlussstücke 21, 22 in der Ablaufwanne 3 angeordnet sind. Die Fixierungselemente sind durch die Sichtöffnung 211 einsetzbar oder entfernbar. Die Sichtöffnung 211 kann offen sein oder mit einem transparenten oder intransparenten Deckel verschlossen sein.

Der Stift 28b kann abgestuft sein. Wenn das Frischwasser unter Druck steht, so wirkt eine Kraft, die das Anschlussstück 21, 22 aus dem Anschlussstutzen 31, 32 herausdrückt. Das Anschlussstück 21, 22 bewegt sich dadurch ein wenig aus dem Anschlussstutzen 31, 32 heraus, bis es am Stift 28b ansteht. Die Abstufung des Stifts 28b verhindert dann, dass der Stift 28b herausgezogen werden kann, solange das Frischwasser unter Druck steht.

Der Anschlussstutzen 31, 32 ist von innen her durch eine Wannenwand 34 führbar und kann mit einer Mutter an einem Aussengewinde 315 des Anschlussstutzens 31, 32 von aussen her an der Wannenwand 34 festgeschraubt werden.

Innerhalb der Anschlussstutzen 31, 32 kann ein Stutzenraum 29 vorliegen, der im Flüssigkeitsstrom zwischen dem Anschlussstück 21, 22 und der Frischwasserzuführung 38 respektive Frischwasserabführung 39 liegt. Wenn das Anschlussstück 21, 22 vom Anschlussstutzen 31, 32 entfernt ist, ist der Stutzenraum 29 von der Innenseite der Ablaufwanne 3 her zugänglich. Der Stutzenraum 29 kann Elemente wie ein Filter, ein Ventil oder einen Absperrhahnen aufnehmen. Diese Elemente sind damit vom Innern der Ablaufwanne 3 zugänglich, austauschbar und wartbar. Sie befinden sich in einem Bereich, in welchem Leckwasser in die Ablaufwanne 3 hinein läuft. Daher können Elemente eingesetzt werden, die weniger hohen Anforderungen an die Lecksicherheit genügen.

Das gezeigte doppelwandige Anschlussstück ist für drei horizontale Rohrabschnitte 24 vorgesehen, kann aber in analoger Weise auch für fünf oder eine andere, insbesondere ungerade Anzahl von Rohrabschnitten 24 gebildet sein.

**Figuren 17a-17f** zeigen eine siebte Ausführungsform eines Wärmetauschers 1. Dieser weist auf: eine Ablaufwanne 3 mit einem Ablaufstutzen 36. In die Ablaufwanne 3 eingesetzt ist eine Stauwanne 7 und darin wiederum eine Wärmetauschereinheit 2 mit Rohrabschnitten 24 und Anschlussstücken 21, 22. Die Anschlussstücke 21, 22 können mit integrierten Umlenkelementen 26 ein- oder zweiwandig ausgeführt sein, also beispielsweise wie in den Ausführungsformen der **Figuren 15a****-b** und **16a-d.**

Die Rohrabschnitte 24 verlaufen innerhalb der Stauwanne 7, die Anschlussstücke 21, 22 sind in Endkappen 74 angeordnet, welche eine wasserdichte Umhüllung um die Anschlussstücke 21, 22 bilden und somit zu einer doppelwandigen Abdichtung zwischen Frischwasser und Abwasser beitragen, was insbesondere sinnvoll ist, wenn die Anschlussstücke 21, 22 selber nur einwandig sind.

Die Anschlussstücke 21, 22 sind durch Anschlussstutzen 31, 32 (strichliert gezeichnet) an eine Frischwasserzufuhr und -ableitung angeschlossen. Diese führen jeweils durch die Wände der Stauwanne 7 und der Ablaufwanne 3. In einer nicht gezeichneten Ausführungsform führen diese Anschlüsse durch den Boden der Stauwanne 7 und der der Ablaufwanne 3.

Die Anschlussstücke 21, 22 sind jeweils mit den Anschlussstutzen 31, 32 lösbar verbunden, insbesondere durch eine werkzeugfrei herstellbare und lösbare Verbindung (Dies gilt auch für den Stauwannenablauf 73 und den Ablaufstutzen 36, wobei diese Verbindung nicht unter Druck steht). Damit ist nach dem Lösen dieser Verbindungen die Stauwanne 7 zusammen mit der darin angeordneten Wärmetauschereinheit 2 aus der Ablaufwanne 3 entfernbar, und kann so gereinigt und gewartet werden.

Die Stauwanne 7 weist zum Eintritt von Abwasser in einem unteren Bereich der Stauwanne 7 angeordnete Siphonöffnung 71 auf sowie einen Stauwannenablauf 73. Im Normalbetrieb des Wärmetauschers 1 fliesst Abwasser aus der Ablaufwanne 3 durch die Siphonöffnung 71, wobei eine Seitenwand der Stauwanne 7 als Siphonwand wirkt. Das Abwasser muss also unter dieser Siphonwand hindurch fliessen. Anschliessend fliesst das Abwasser über ein Verteilelement 42, welches in dieser Ausführungsform eine horizontale Kante aufweist, bis zu welcher sich das durch die Siphonöffnung 71 fliessende Abwasser aufstaut. Eine an die horizontale Kante anschliessende Verteilfläche 75 führt das über die horizontale Kante strömende Abwasser über eine Ablaufkante 76 und über die Rohrabschnitte 24 der Wärmetauschereinheit. Zuunterst in der Stauwanne 7 sammelt sich das Abwasser und fliesst durch den Stauwannenablauf 73 in den Ablaufstutzen 36 der Ablaufwanne 3.

Der Ablaufstutzen 36, der Stauwannenablauf 73 und das Innere der Stauwanne 7 sind natürlich gegenüber dem Rest der Ablaufwanne 3 abgedichtet, so dass im Normalbetrieb dass Abwasser aus dem Inneren der Stauwanne 7, nach dem Überströmen der Rohrabschnitte 24, nicht in die Ablaufwanne 3 gelangt, und Abwasser aus der Ablaufwanne 3 nur durch die Siphonöffnung 71 und über das Verteilelement 42 zu den Rohrabschnitten 24 gelangt.

Das Innere der Stauwanne 7 ist über den Stauwannenablauf 73 und den Ablaufstutzen 36 zu der Kanalisation hin offen. Ein geruchsdichter Stauwannendeckel 72 schliesst daher das Innere gegenüber der Umgebung ab. Über dem Stauwannendeckel 72 kann der Deckel 5 angeordnet sein, oder der Deckel 5 kann mit dem Stauwannendeckel 72 kombiniert sein.

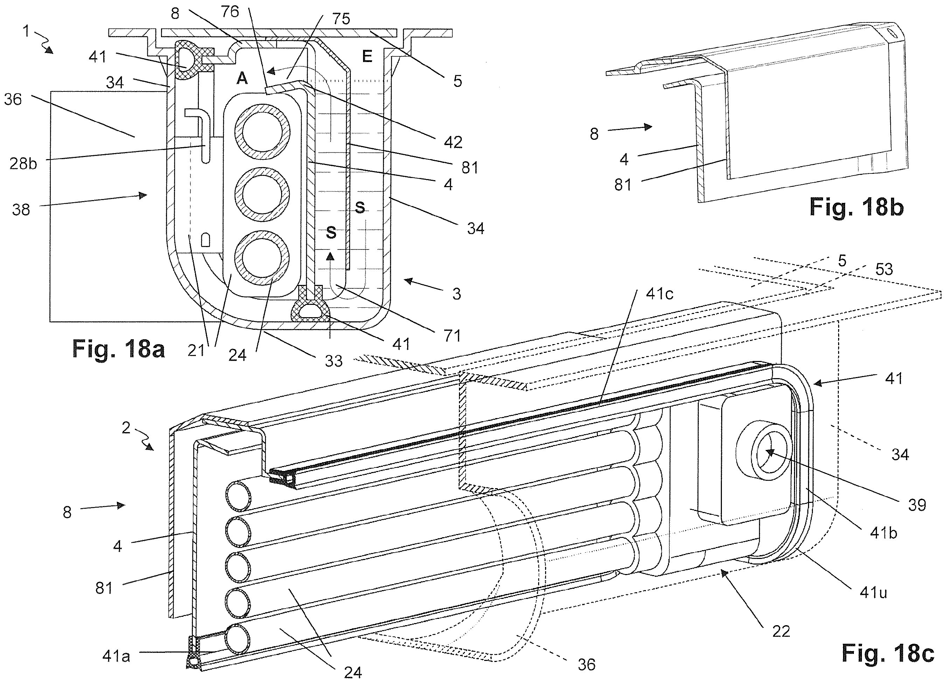

**Figuren 18a-18c** zeigen eine achte Ausführungsform eines Wärmetauschers. Dieser weist auf: eine Ablaufwanne 3 mit einem Ablaufstutzen 36. In die Ablaufwanne 3 ist eine Wärmetauschereinheit 2 mit Rohrabschnitten 24 und Anschlussstücken 21, 22. eingesetzt. Die Anschlussstücke 21, 22 können mit integrierten Umlenkelementen 26 ein- oder zweiwandig ausgeführt sein, also beispielsweise wie in den Ausführungsformen der **Figuren 15a****-b** und **16a-d.**

Die Rohrabschnitte 24 verlaufen innerhalb der Ablaufwanne 3. Die Anschlussstücke 21, 22 können doppelwandig ausgebildet sein oder einwandig, oder einwandig und mit einer Umhüllung versehen sein.

Über die Anschlussstücke 21, 22 und Anschlussstutzen (nicht gezeichnet) ist die Wärmetauschereinheit an eine Frischwasserzufuhr und -ableitung angeschlossen. Diese führen jeweils durch die Wände der Ablaufwanne 3. In einer nicht gezeichneten Ausführungsform führen diese Anschlüsse durch den Boden der Ablaufwanne 3.

Die Anschlussstücke 21, 22 sind jeweils mit den Anschlussstutzen 31, 32 lösbar verbunden, insbesondere durch eine werkzeugfrei herstellbare und lösbare Verbindung. Damit ist nach dem Lösen dieser Verbindungen die Wärmetauschereinheit 2 aus der Ablaufwanne 3 entfernbar, und kann so gereinigt und gewartet werden. Beispielsweise kann die Verbindung durch einen Fixierungselement wie einem Bügel oder einem Stift 28b gesichert sein, welches durch eine Bohrung oder eine Nut von sowohl einem der Anschlussstücke 21, 22 als auch des entsprechenden Anschlussstutzens 31, 32 führt. Auch diese Verbindung kann so gestaltet sein, dass das Fixierungselement nicht lösbar ist, solange das Frischwasser unter Druck steht. Auch kann ein Bügel als Fixierungselement eine oder mehrere der Funktionen eines Bügels wie in den **Figuren 6b** und **6f** gezeigt realisieren, also insbesondere das Wegdrücken eines Anschlussstücks vom entsprechenden Anschlussstutzen beim Öffnen des Bügels und/oder das Einrasten des Bügels und/oder das Zusammenwirken mit einem Absperrhebel.

Der Wärmetauscher 1 weist einen Staudeckel 8 auf, welcher einen Luftraum, auch Ablaufbereich genannt, um die Wärmetauschereinheit 2 und den Ablaufstutzen 36 bezüglich des übrigen Bereichs der Ablaufwanne 3 abtrennt und einen Abwasserfluss aus diesem übrigen Bereich in einen Bereich unterhalb des Staudeckels 8 nur durch einen Siphon zulässt. Der Siphon wird gebildet durch eine Siphonwand 81 des Staudeckels 8. Das Abwasser muss also unter dieser Siphonwand 81 hindurch durch eine Siphonöffnung 71 zwischen Siphonwand 81 und Stauelement 4 fliessen. Anschliessend fliesst das Abwasser über ein Verteilelement 42, welches in dieser Ausführungsform eine horizontale Kante aufweist, bis zu welcher sich das unter die Siphonwand 81 hindurch fliessende Abwasser aufstaut. Eine an die horizontale Kante anschliessende Verteilfläche 75 führt das über die horizontale Kante strömende Abwasser über die Rohrabschnitte 24 der Wärmetauschereinheit. Zuunterst in der Ablaufwanne 3 sammelt sich das Abwasser und fliesst durch den Ablaufstutzen 36 der Ablaufwanne 3.

Der Ablaufstutzen 36, und der Bereich unterhalb des Staudeckels 8 sind gegenüber dem übrigen Bereich der Ablaufwanne 3 abgedichtet, beispielsweise mit einer umlaufenden Dichtung 41 zwischen Staudeckel 8 und Ablaufwanne 3. Damit ist gewährleistet, dass im Normalbetrieb das Abwasser aus dem Bereich unterhalb des Staudeckels 8 nach dem Überströmen der Rohrabschnitte 24 nicht in den übrigen Bereich der Ablaufwanne 3 gelangt, und Abwasser aus dem übrigen Bereich der Ablaufwanne 3 nur durch die Siphonöffnung 71 und über das Verteilelement 42 zu den Rohrabschnitten 24 gelangt.

Die Dichtung 41 zwischen Staudeckel 8 und Ablaufwanne 3 verläuft durchgehend zunächst entlang eines ersten, horizontalen Abschnittes 41a entlang des Wannenbodens 33, dann geht sie über in einen zweiten, vertikalen Abschnitt 41b entlang der Wannenwand 34, einen dritten, horizontalen Abschnitt 41c entlang der Wannenwand 34 und einen vierten, vertikalen Abschnitt entlang der Wannenwand 34 zurück zum ersten Abschnitt.

Die Ablaufwanne 3 kann so geformt sein, dass ein Übergangsbereich zwischen Wannenwand 34 und Wannenboden 33 im Querschnitt einem Kreisabschnitt folgend geformt ist. Damit wird die Abdichtung einfacher. Übergangsbereiche 41u der Dichtung 41 zwischen dem ersten und dem zweiten sowie dem vierten und dem ersten Abschnitt der Dichtung 41 sind dem entsprechend zumindest annähernd einer Folge von zwei Kreisbögen (einer vertikal, einer horizontal) oder einem Abschnitt einer Ellipse folgend ausgebildet, entsprechend der Form des Übergangsbereichs der Ablaufwanne 3.

Die Dichtung 41 bildet einen Geruchsverschluss zwischen dem Ablaufstutzen 36 und der Umgebung des Wärmetauschers 1.

Die Siphonwand 81 kann an unterschiedlichen Stellen entlang der Wännetauschereinheit jeweils einen unterschiedlichen Abstand zur Wannenwand 34 aufweisen. An den Stellen, an welchen der Abstand der Siphonwand 81 zur Wannenwand 34 grösser ist, ist ein Abstand der Siphonwand 81 zur Stauelement 4 kleiner und umgekehrt. Damit kann sichergestellt werden, dass gemäss gesetzlichen Vorschriften ein Gegenstand vorgeschriebener Grösse (beispielsweise eine Kugel) den Siphon passieren kann. Einen ersten, nach unten führenden Abschnitt des Siphons kann der Gegenstand in mindestens einem Bereich passieren, in welchem der Abstand zwischen Wannenwand 34 und Siphonwand 81 grösser ist, und einen zweiten, wieder nach oben führenden Abschnitt des Siphons kann sie in mindestens einem Bereich passieren, in welchem der Abstand zwischen Stauelement 4 und Siphonwand 81 grösser ist.

Da der Staudeckel 8 einerseits gegen eine Wannenwand 34 und andererseits gegen den Wannenboden 33 abgedichtet ist, können Befestigungselemente und korrespondierende Aufnahmen 56b für Befestigungselemente so ausgebildet sein, dass sie den Staudeckel 8 schräg sowohl gegen Wannenboden 33 und Wannenwand 34 ziehen. Beispielsweise sind schräge Aufnahmen 56b für Befestigungselemente wie in den **Figuren 16a - 16d** gezeigt einsetzbar. In diese oder andere Aufnahmen können Schrauben oder Bajonettverschlüsse eingesetzt werden. Diese können Hebel aufweisen, welche im nicht verriegelten Zustand vorstehen und ein Schliessen des Deckels 5 behindern.

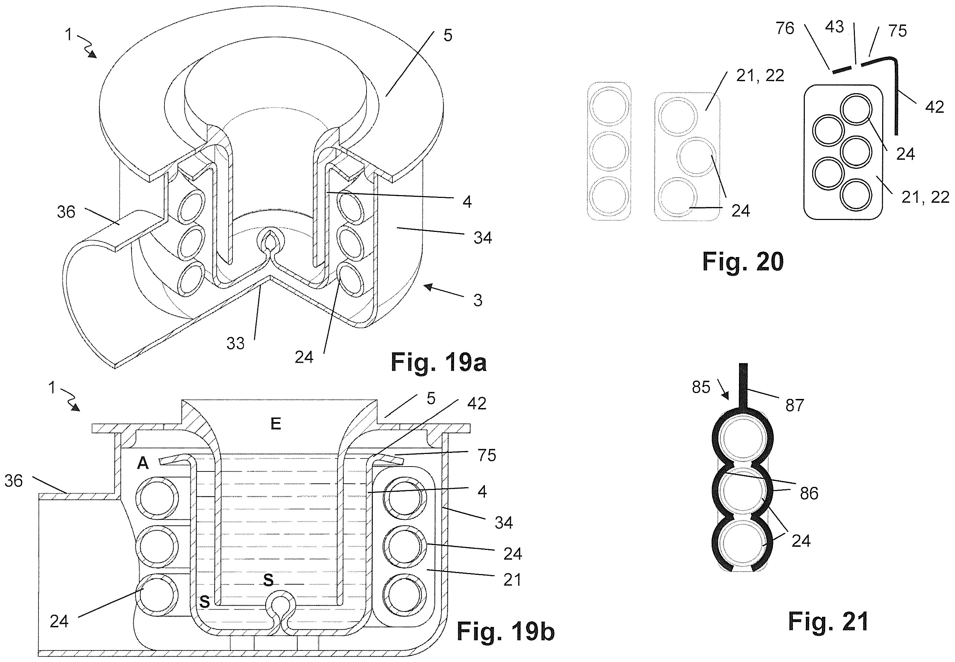

**Figuren 19a - 19b** zeigen eine Wärmetauschereinheit 2 in welchem die Rohrabschnitte 24 gebogen sind. Die Rohrabschnitte 24 folgen jeweils einem Kreisabschnitt. Die Anschlussstücke 21, 22 sind separat ausgebildet, können aber in einer anderen Ausführungsform kombiniert als ein einziges Anschlussstück ausgebildet sein, in welchem alle Umlenkelemente realisiert sind. Anstelle von Umlenkelementen, die eine Umlenkung um 180° realisieren, können auch Umlenkelemente vorliegen, die die Frischwasserleitung (von oben gesehen) im wesentlichen in dieselbe Richtung weiter führen, aber auf eine andere Ebene führen. Dazu können diese Umlenkelemente einen S-förmigen Verlauf innerhalb des Anschlussstücks 21 aufweisen. Wie schon im Zusammenhang mit den anderen Ausführungsformen von Anschlussstücken beschrieben kann auch dieses Anschlussstück 21 einwandig oder doppelwandig und aus verschiedenen Materialien oder Materialkombinationen realisiert sein.

In allen Ausführungsformen, in welcher der Ablaufstutzen 36 horizontal wegführend gezeichnet ist, kann er auch vertikal durch den Wannenboden 33 wegführen, oder diagonal durch Wannenboden 33 und/oder Wannenwand 34. Es können auch mehrere Ablaufstutzen vorliegen.

**Figur 20** zeigt in der Mitte und auf der rechten Seite horizontale Rohrabschnitte 24, die übereinander und in horizontaler Richtung gegeneinander versetzt angeordnet sind. Damit ist eine geringere Bauhöhe als in der Anordnung auf der linken Seite erzielbar (in welcher die Rohrabschnitte im Wesentlichen vertikal übereinander liegen). Eine gute Überströmung der Rohrabschnitte 24 ist dennoch gewährleistet, indem ein herablaufender Wasserfilm sich durch Adhäsion und Kohäsion über beide Seiten der Rohrabschnitte 24 verteilt.

In der Anordnung auf der rechten Seite der **Figur 20** sind die Rohrabschnitte 24 entlang einer vertikalen Richtung betrachtet nacheinander durchströmt. In dem Beispiel bilden die Rohrabschnitte 24 eine Reihe mit drei und eine versetzte Reihe mit zwei Rohrabschnitte 24. In einer dieser Reihen liegen die Rohrabschnitte im Wesentlichen vertikal übereinander. Es können auch vier und drei oder fünf und vier Rohrabschnitte 24 in den beiden Reihen vorliegen, oder die gleiche Anzahl von Rohrabschnitten in den beiden Reihen. Solche Anordnungen mit versetzten Reihen von Rohrabschnitten 24 können beispielsweise in den Ausführungsformen der Figuren 17 bis 19 eingesetzt werden. Dabei kann das Verteilelement 42 nach dem Überlauf eine Reihe von Verteilöffnungen 43 in der Verteilfläche 75 aufweisen, wobei die Verteilöffnungen 43 oberhalb der einen Reihe von Rohrabschnitten 24 angeordnet sind, und eine Ablaufkante 76 oberhalb der anderen Reihe von Rohrabschnitten 24. In analoger Weise können auch weitere Reihen von Rohrabschnitten vorliegen.

**Figur 21** zeigt ein Reinigungsgerät 85 zum Reinigen von mehreren übereinander liegenden Rohrabschnitten 24. Das Reinigungsgerät 85 weist zwei Arme 86 auf, die sich, ausgehend von einem Basiselement oder Halteelement 87, im Wesentlichen parallel zu einander in dieselbe Richtung erstrecken. Die Arme können auf einen Satz von Rohrabschnitten 24 aufgebracht werden, so dass sie diesen umschliessen. Die Arme 86 können eine Federwirkung aufweisen und durch leichtes Aufbiegen von den Rohrabschnitten 24 entfernbar und somit austauschbar sein. Die Arme 86 können mit mechanischen Reinigungselementen, beispielsweise Bürsten oder Schaber oder einem Streifen aus einem rauen Material ausgebildet sein. Sie können beispielsweise manuell dem Satz von Rohrabschnitten 24 entlang geschoben werden und dadurch die Rohrabschnitte 24 mechanisch reinigen. Auf Innenflächen des Reinigungsgerätes 85, welche mit dem Rohrabschnitten 24 in Kontakt sind, kann ein Reinigungsmittel aufgebracht sein und/oder die Reinigungselemente können mit Reinigungsmittel getränkt oder durchsetzt sein. Es kann dabei auch ein Speicherelement mit einem Vorrat von Reinigungsmittel vorliegen, welches beispielsweise durch Kapillarität zu den Reinigungselementen fliesst. Ist das Reinigungsmittel aufgebraucht, kann das Reinigungsgerät ausgetauscht werden. Das Halteelement 87 ist hier vertikal gezeichnet, es kann aber auch horizontal oder diagonal verlaufen, und einen Griff oder anatomisch geformten Abschnitt zur manuellen Betätigung aufweisen. Das Reinigungsgerät 85 kann auch zur Beabstandung der Rohrabschnitte 24 beim Transport und/oder im Betrieb des Wärmetauschers 1 dienen.

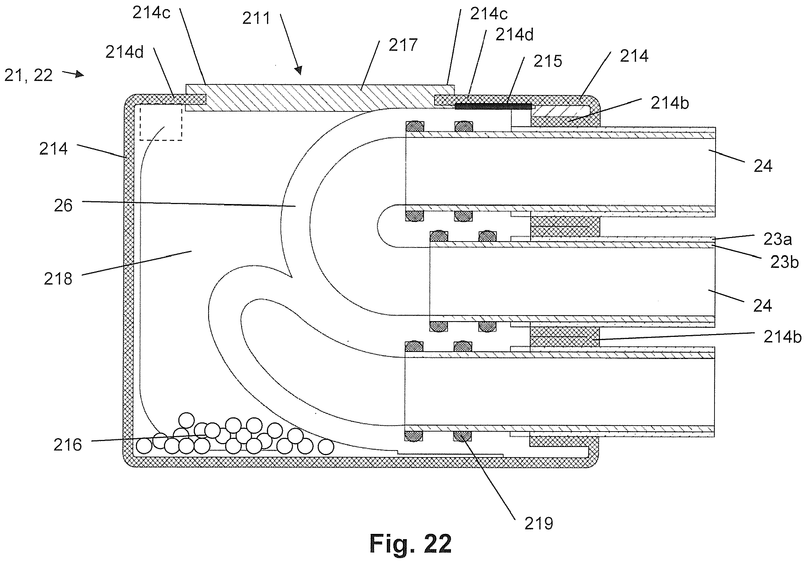

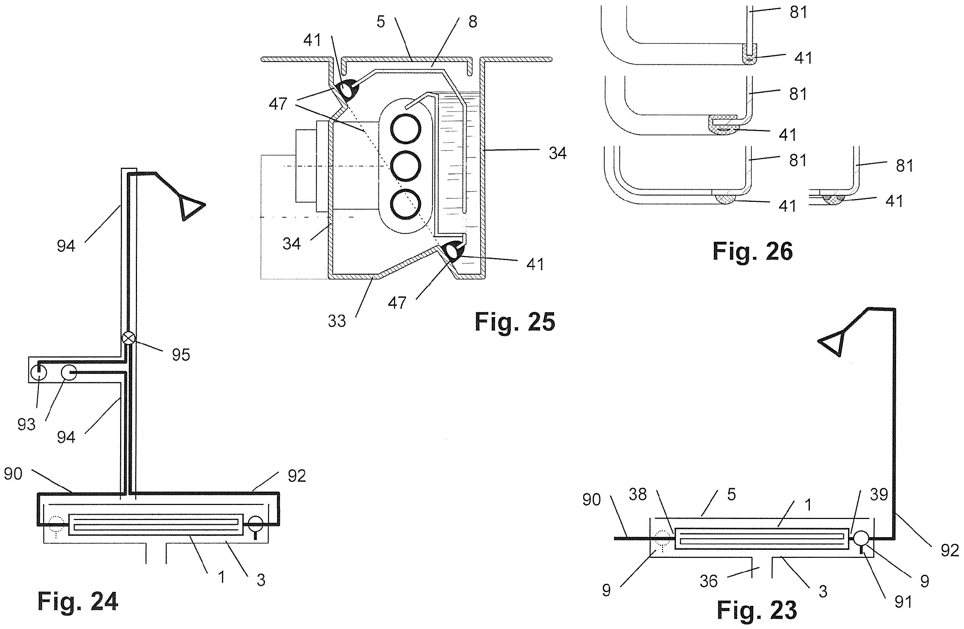

**Figur 22** zeigt ein Anschlussstück 21, 32, beispielsweise aus Metall, mit einer Umhüllung 214 aus einem elastischen Kunststoff. In das Anschlussstück 21, 32 sind Rohrabschnitte 24 eingesteckt, mit einer ersten, inneren Trennung zwischen frischwasserführenden Bereichen und abwasserführenden Bereichen des Wärmetauschers 1, die durch O-Ringe 219 abgedichtet ist. Die Umhüllung 214 bildet eine zweite, äussere Trennung. In der Figur 23 liegt die Umhüllung 214 in einzelnen Bereichen eng am Anschlussstück 21, 31 an und ist in anderen Bereichen von diesem beabstandet. Beispielsweise weist das Anschlussstück 21, 31 in einem Bereich neben Umlenkelementen 26 und Zu- respektive Abführung einen Flanschbereich 218 auf, mit dem das Anschlussstück 21, 31 am entsprechenden Anschlussstutzen 31 montiert ist. Die Umhüllung 214 bildet eine Haube und einen Hohlraum neben diesem Flanschbereich 218. Die Hülle kann eine Sichtöffnung 211 mit einem Verschluss 217 aufweisen. Der Verschluss 217 kann aus einem transparenten Material gefertigt sein.

Die Umhüllung 214 kann einen oder mehrere verschiedene Dichtungsbereiche bilden:
- einen ersten Dichtungsbereich zwischen dem Anschlussstück 21, 31 und der Wannenwand 34;
- einen zweiten Dichtungsbereich 214b zwischen dem Anschlussstück 21, 31 und einem in dieses eingesteckten Rohrabschnitt 24;
- einen dritten Dichtungsbereich 214c zwischen dem Anschlussstück 21, 31 und einem in das dem Anschlussstück 21, 31 eingesteckten Verschluss 217 einer Sichtöffnung 211; und/oder
- einen vierten Dichtungsbereich 214d zwischen dem Anschlussstück 21, 31 und einem auf dem Anschlussstück 21, 31 aufliegenden Deckel, insbesondere einem Staudeckel 8 bildet, wobei eine Öffnung des Deckels vorliegt und durch diesen Dichtungsbereich die Öffnung gegenüber einem Bereich um das Anschlussstück abgedichtet ist. Falls der in der der Figur 22 links der Sichtöffnung 211 gezeichnete vierte Dichtungsbereich 214d genutzt wird, ist er auf einem strichliert gezeichneten Teil des Anschlussstücks 21, 32 abgestützt und kann gegen diesen gedrückt werden.

Im Zwischenbereich zwischen der Umhüllung 214 und dem Anschlussstück kann ein Material 215 eingebracht sein, welches bei Aufnahme von Wasser seine Farbe ändert. Wenn die Umhüllung transparent oder semitransparent ist, ist die Farbe des Materials 215 durch die Umhüllung 214 hindurch sichtbar und kann das Vorhandensein von Flüssigkeit und damit eines Lecks optisch erkannt werden.

Alternativ oder zusätzlich können im Zwischenbereich ein oder mehrere Schwimmkörper 216 als Anzeigekörper vorliegen. Diese sind leichter als Wasser und werden nach oben gedrängt, wenn Leckwasser im Zwischenbereich vorliegt. Die Schwimmkörper 216 können ein Granulat oder eine Menge von Kügelchen oder anderen Körpern sein. Es kann aber auch ein einzelner Schwimmkörper vorliegen. Allen gemeinsam ist, dass sie beim Auftreten von Leckwasser nach oben treiben und durch eine Sichtöffnung 211 oder durch eine transparente Umhüllung 214 hindurch sichtbar werden und damit das Vorhandensein eines Lecks anzeigen.

**Figur 23** zeigt eine Ablaufwanne 3 mit einem darin angeordneten Ablassventil 9 einer Dusche. Die Ablaufwanne 3 fängt das Abwasser aus der entsprechenden Duschwanne auf und der in der Ablaufwanne 3 angeordnete Wärmetauscher 1 wärmt damit Frischwasser zur Verwendung in der Dusche auf. Das Ablassventil 9 erlaubt, eine Leitung 92 zur Dusche zu entleeren, wenn die Dusche nicht in Betrieb ist. Die Entleerung kann automatisch geschehen, beispielsweise wenn der Frischwasserfluss abgestellt ist oder drucklos ist. Die Entleerung der Leitung 92 geschieht durch beispielsweise einen Entleerungsstutzen 91 in die Ablaufwanne 3 hinein. Das Ablassventil 9 kann zwischen der Frischwasserabführung 39 des Wärmetauschers 1 und der Leitung 92 zur Dusche angeordnet sein. Das Ablassventil 9 kann alternativ (strichliert gezeichnet) zwischen einer äusseren Frischwasserzuführung 90 zum Wärmetauscher 1 und der Frischwasserzuführung 38 des Wärmetauschers 1 angeordnet sein.

**Figur 24** zeigt neben den bereits erwähnten Elementen wie ein Wärmetauscher 1 in eine bestehende Installation integriert werden kann. Dabei wird eine Ausbaueinheit 94 eingesetzt, welche an bestehende Kalt- und Warmwasseranschlüsse 93 angeschlossen wird. Die Ausbaueinheit 94 kann auf einer bestehenden Wand montiert werden, so dass die Wand nicht zum Verlegen der Leitungen aufgebrochen werden muss. Innerhalb der Ausbaueinheit 94 ist die Frischwasserzuführung 90 vom Kaltwasseranschluss zumindest teilweise zum Wärmetauscher 1 geführt, und ist die Leitung 92 zumindest teilweise vom Wärmetauscher 1 zur Dusche oder zu einem Mischer 95 geführt. Der Mischer 95 kann Wasser aus der Frischwasserabführung 39 des Wärmetauschers 1 mit Wasser aus dem Warmwasseranschluss mischen.

In einer Ausführungsform deckt die Ausbaueinheit 94 diejenigen Leitungsabschnitte zum und vom Wärmetauscher 1, welche vertikal entlang einer Wand verlaufen, ab oder enthält diese. Die Ausbaueinheit 94 kann die bestehenden Kalt- und Warmwasseranschlüsse 93 abdecken. Die Ausbaueinheit 94 kann den Mischer 95 und zumindest einen Abschnitt einer Leitung zur Dusche oder einem anderen Auslass abdecken oder enthalten.

In einer Ausführungsform liegt nur ein Kaltwasseranschluss vor und weist die Ausbaueinheit eine lokale Wassereaufwärmvorrichtung auf, insbesondere eine elektrische Wasserheizeinrichtung.

In einer Ausführungsform weist die Ausbaueinheit Messmittel auf, insbesondere Temperatur- und Durchflussmesser, mit welchen ein Verbrauch an Wasser und/oder Energie sowie ein Wirkungsgrad des Wärmetauschers ermittelbar ist und optional einem Nutzer angezeigt werden kann.

**Figur 25** zeigt eine Ausführungsform einer Dichtungsanordnung, in welcher die umlaufende Dichtung 41 zwischen Staudeckel 8 und Ablaufwanne 3 in respektive entlang einer Ebene verläuft. Damit ist eine besonders zuverlässige Abdichtung realisierbar. Die Ebene, entlang welcher die Dichtung 41 verläuft, ist geneigt, in einem Winkel von beispielsweise zwischen 30° und 80°, und insbesondere von rund 60° zur Horizontalen (in einem eingebauten Zustand des Wärmetauschers). Die Dichtung 41 liegt auf einer ebenfalls in dieser Ebene verlaufenden Fläche der Ablaufwanne 3 auf. Diese Fläche kann als Schulter oder Dichtungsschulter 47 am Wannenboden 33 und an einer der Wannenwände 34 ausgebildet sein. In einem Übergangsbereich zwischen diesen beiden kann die Fläche (strichliert gezeichnet) an stirnseitigen Wannenwänden ausgebildet sein oder sich von den stirnseitigen Wannenwänden ausgehend gegen das Innere der Ablaufwanne erstrecken.

**Figur 26** zeigt verschiedene Formen von Dichtungen, von oben nach unten:
- eine Dichtung mit U-Profil. Eine solche ist auch in den Figuren 18a und 18c gezeigt. Die Dichtung ist mittels eines Schlitzes auf die Kante eines Bleches gesteckt. Eine Anpresskraft zum Dichten verläuft bei dieser Dichtung innerhalb der Ebene eines Bleches, auf dessen Kante die Dichtung gesteckt ist.
- eine Dichtung mit e-Profil. Die Dichtung ist mittels eines Schlitzes auf die Kante eines Bleches gesteckt. Eine Anpresskraft zum Dichten verläuft bei dieser Dichtung senkrecht zur Ebene eines Bleches, auf dessen Kante die Dichtung gesteckt ist. Diese Form der Dichtung hat den Vorteil, dass ein kurvenförmiger Verlauf der Dichtung in einer Ebene in einfacher Weise durch den Verlauf der Kante des Bleches realisiert werden kann. Dies ist beispielsweise durch Laserschneiden einfach und präzise möglich. Mit einer Dichtung mit O-Profil muss ein solcher Verlauf durch Biegen des Bleches realisiert werden, was schwieriger ist.
- eine geschäumte Dichtung in einer einschichtigen und in einer mehrschichtigen Variante. Eine Anpresskraft zum Dichten verläuft bei dieser Dichtung senkrecht zur Ebene eines Bleches, auf welches die Dichtung aufgebracht respektive geschäumt ist. Die Dichtung kann aus Polyurethan oder Silikon sein und aufgespritzt werden, insbesondere als "formed in place foam gasket" (FIPFG) realisiert sein. Damit lassen sich enge Biegeradien und eine kompakte Bauweise realisieren.

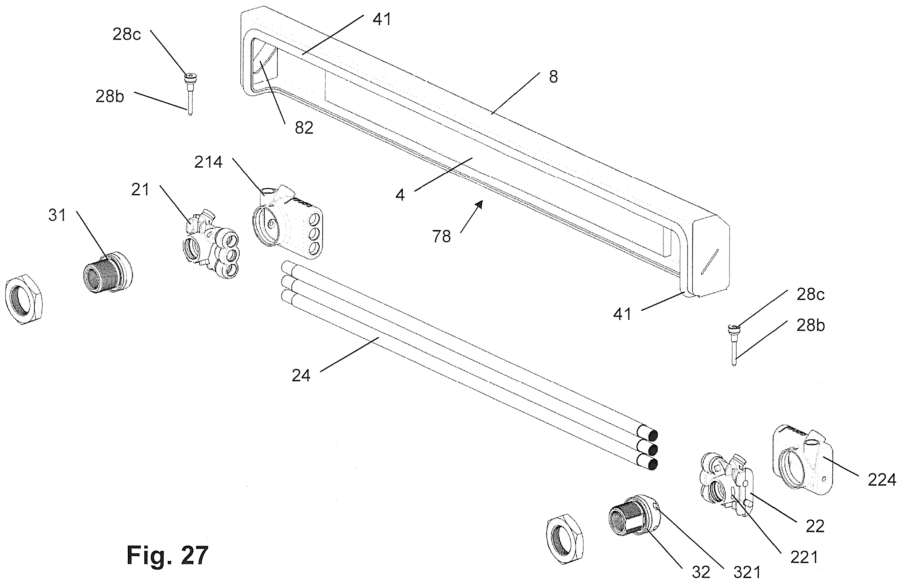

**Figur 27** zeigt eine weitere Ausführungsform einer Wärmetauschereinheit 2, anhand einer Explosionszeichnung mit einem ersten Anschlussstück 21 und einem zweiten Anschlussstück 22, welche an einem ersten respektive zweiten Anschlussstutzen 31, 32 lösbar montierbar sind, sowie mehreren Rohrabschnitten 24, die insbesondere doppelwandig sein können. Zur Montage sind Bolzen oder Stifte 28b als Fixierungselemente vorgesehen. Diese können zur Fixierung, ähnlich wie in der Ausführungsform der Figur 18a, durch ein Bohrung oder Einbuchtung 221 in einem Anschlussstück 21, 22 und eine korrespondierende Bohrung 321 im entsprechenden Anschlussstutzen 31,32 geschoben werden.

Die Anschlussstücke 21, 22 können durch eine erste Umhüllung 214 respektive eine zweite Umhüllung 224 umhüllt sein, welche wie in der Ausführungsform der **Figur 22** eine zweite Trennung zwischen Frischwasser und Abwasser bildet. Eine Kappe 28c dient zum Verschliessen einer Sichtöffnung 211 der jeweiligen Umhüllung.

Die Wärmetauschereinheit 2 ist wie in den Ausführungsformen der **Figuren 15** bis **18** gezeigt in einer Ablaufwanne montierbar. Dabei kann sie, analog zur Ausführungsform der **Figur 18**, mit einem Staudeckel 8 gedeckt sein, welcher einen Bereich um die Wärmetauschereinheit 2 von den restlichen Bereichen der Ablaufwanne 3 trennt und mittels einer Dichtung 41 abdichtet.

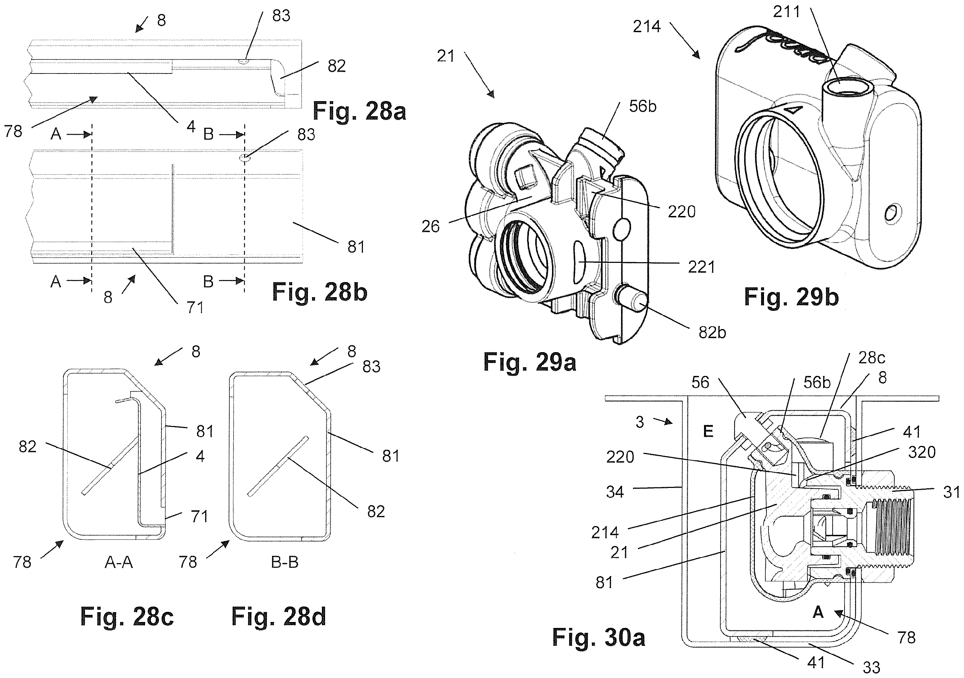

**Figuren 28a-28d** zeigen Details des Staudeckels 8 der **Figur 27**, wobei dieser Staudeckel auch mit einer anderen Ausführungsform von Wärmetauschereinheit 2 als jener der **Figur 27** kombinierbar ist. Der Staudeckel 8 weist im Wesentlichen dieselben funktionalen Elemente auf wie jener der Figur 18, insbesondere Siphonwand 81, Siphonöffnung 71, Stauelement 4 und Verteilelement 42. Der Staudeckel 8 und insbesondere die genannten Elemente können dabei aus einem einzigen Stück Blech durch Biegeoperationen geformt werden, und ohne Tiefziehoperationen. **Figur 28a** zeigt eine Ansicht von unten und **Figur 28b** eine Ansicht vom Einlaufbereich **E** her, also mit Blick gegen die Siphonwand 81. **Figuren 28c** und **28d** zeigen Querschnitte A-A und B-B gemäss der **Figur 28b****.** Nebst den bereits genannten Elementen ist eine Ablauföffnung 78 sichtbar. Dies ist die Öffnung unter dem Staudeckel 8 zum Ablaufstutzen 36 hin. Entlang eines Randes der Ablauföffnung 78 kann die Dichtung 41 zur Abdichtung des Staudeckels 8 gegen die Ablaufwanne 3 angeordnet sein (nur in der **Figur 27** gezeigt). An einer Oberseite des Staudeckels 8 sind Löcher 83 zur Aufnahmen von Befestigungselementen, beispielsweise für Bajonettverbindungen oder Schraubverbindungen, zur Befestigung des Staudeckels an den Anschlussstücken 21, 22 angeordnet. An stirnseitigen Seitenwänden des Staudeckels 8 sind Führungselemente oder Führungsbleche 82 angeordnet. Diese stossen an korrespondierende Führungsvorsprünge 82b der Anschlussstücke 21, 22 an, stabilisieren dadurch die Lage des Staudeckels und vergleichmässigen eine Anpresskraft der Dichtung 41 entlang ihres Verlaufes.

**Figuren 29a-29b** zeigen ein Anschlussstück 21 der Wärmetauschereinheit der **Figur 27****.** Die meisten Elemente sind analog zu jenen der **Figuren 16** und **22** ausgebildet. Hervorzuheben ist die Aufnahme 56b für Befestigungselemente 56 zur Befestigung eines Stauelementes, einer Stauwanne oder eines Staudeckels entsprechend der **Figur 16** und die Umhüllung 214 zur Bildung einer zweiten, äussere Trennung zwischen Frischwasser und Abwasser entsprechend der **Figur 22****.**

Unterschiedlich sind hingegen die Fixierung des Anschlussstückes 21 am Anschlussstutzen 31 und die Kontroll- oder Sichtöffnung 211, sowie Demontageelemente 220.

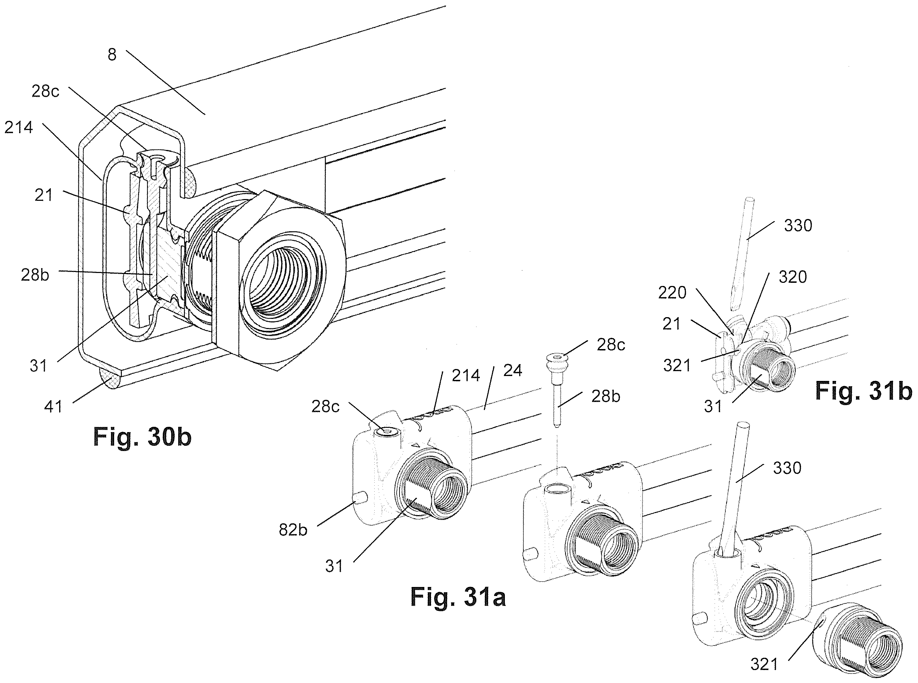

**Figuren 30a-30b** zeigen Querschnitte durch ein Anschlussstück 21 und einen Anschlussstutzen 31 der **Figur 29**, mit einer am Anschlussstück montierten Staudeckel 8. In der Figur 30a ist zudem noch die Ablaufwanne 3 eingezeichnet. In der **Figur 30a** ist ersichtlich, wie der Staudeckel mittels eines Befestigungselementes 56, hier ein Bajonettverschluss, an der Aufnahme 56b des Anschlussstücks 21 befestigt ist. Dadurch wird die umlaufende Dichtung 41 gegen die Wannenwand 34 und den Wannenboden 33 gepresst und dichtet den Ablaufbereich **A** gegen den Einlaufbereich **E** ab. In der Figur 30b ist die Fixierung des Anschlussstücks 21 am Anschlussstutzen 31 mittels eines Fixierungselementes ersichtlich. Die bereits erwähnten Bolzen oder Stifte 28b als Fixierungselemente können wie in der **Figur 16d** gezeigt gestuft geformt sein, so dass sie sich nur dann (insbesondere leicht) entfernen lassen, wenn die Frischwasserleitung nicht unter Druck steht. Die Kappe 28c verschliesst dieselbe Öffnung oder Sichtöffnung 211, durch welche die Fixierungselemente montierbar und demontierbar sind. Die Kappe 28c erlaubt zudem eine Kontrolle, ob sich Wasser im Zwischenraum 212 des Anschlussstücks 21 befindet. Die Kappe 28c kann am Fixierungselement 28b oder an der Umhüllung 214 oder an beiden steckbar und abziehbar gehalten sein. In den Figuren sind Kappe 28c und Fixierungselement 28b als an einem einzigen Teil geformt dargestellt.

Alternativ oder zusätzlich kann die Umhüllung 214 ein bei Überdruck sich öffnendes Ventil aufweisen, an dem im Zwischenraum 212 vorliegendes Wasser austreten kann. Das Ventil kann als Teil der Umhüllung 214 geformt sein, beispielsweise as Entenschnabelventil ("duck bill valve").

**Figuren 31a-31b** zeigen Demontageelemente und ihre Verwendung. Die Demontageelemente sind durch Ausformungen 220 am Anschlussstück 21 und/oder Ausformungen 320 am Anschlussstutzen 31 realisiert, zwischen welche ein Werkzeug 330 einführbar ist, mit welchem Anschlussstück 21 und Anschlussstutzen 31 voneinander wegdrückbar sind. In den Figuren ist dies beispielhaft ein Schraubenzieher. Ein Zwischenraum zwischen Anschlussstück 21 und Anschlussstutzen 31, der durch die genannten Ausformungen 220, 320 gebildet ist, weist einerseits im montierten Zustand der Wärmetauschereinheit eine vorgegebene minimale Grösse oder Öffnungsweite auf, und andererseits einen definierten Anschlag oder Tiefe. Damit kann das Werkzeug sicher eingeführt und ohne Beschädigung der Teile betätigt werden. Beispielsweise beträgt die minimale Grösse oder Öffnungsweite 5mm * 3mm, die Tiefe mindestens 5mm. **Figur 31a** zeigt eine Sequenz mit den folgenden Demontageschritten:
- Entfernen der Kappe 28c von der Sichtöffnung 211. Optional Kontrolle, ob Wasser im Zwischenraum vorliegt. Gleichzeitig (bei einteiliger Konstruktion) mit dem Entfernen der Kappe 28c oder daran anschliessend Entfernen des Fixierungselements 28b.
- Einführen des Werkzeuges 330 durch die Sichtöffnung 211 und Betätigen, insbesondere Drehen des Werkzeuges zwischen Anschlussstück 21 und Anschlussstutzen 31 zum Auseinanderschieben derselben, insbesondere indem das Werkzeug zwischen die Ausformungen 220, 320 geführt wird und zum Auseinanderschieben gegen die Ausformungen drückt.

**Figur 31b** zeigt die gegenseitige Lage von Anschlussstück 21 und Anschlussstutzen 31 unter Weglassung der Umhüllung 214, so dass die gegenseitige Lage der Ausformungen 220, 320 sichtbar wird. Siehe dazu auch **Figur 30a****.**

## Patentansprüche

1. Wärmetauscher (1) zum Aufwärmen von Frischwasser mittels Wärme von Abwasser bei einer Dusche oder Badewanne, aufweisend eine Ablaufwanne (3), mindestens eine in der Ablaufwanne (3) angeordnete und für den Anschluss in eine Frischwasserzuführung (38) vorgesehene Wärmetauschereinheit (2), ein Verteilelement (42), welches zum Verteilen von ablaufendem Abwasser über die mindestens eine Wärmetauschereinheit (2) angeordnet ist, wobei die mindestens eine Wärmetauschereinheit (2) mehrere sequentiell aufeinander folgende Rohrabschnitte (24) aufweist, die durch Umlenkabschnitte (25) miteinander verbunden sind und bei einer Orientierung des Wärmetauschers wie im Betrieb des Wärmetauschers im wesentlichen horizontal verlaufen,
**dadurch gekennzeichnet, dass** jeweils zwei horizontal verlaufende, aufeinanderfolgende, also durch einen Umlenkabschnitt miteinander verbundene, Rohrabschnitte (24) übereinander angeordnet sind und nacheinander von herabtropfendem oder herablaufendem Abwasser beträufelt oder überströmt werden.

2. Wärmetauscher (1) gemäss Anspruch 1, aufweisend eine doppelwandige Trennung zwischen frischwasserführenden Bereichen und abwasserführenden Bereichen durch einen Zwischenraum, wobei die Rohrabschnitte (24) durch Doppelwandrohre gebildet sind, und wobei
• eine **Anschlusseinheit** (6; 21, 22) vorliegt, wobei ein Innenbereich (61; 212) der Anschlusseinheit von abwasserführenden Bereichen flüssigkeitsdicht getrennt ist, und frischwasserführende Leitungen (62; 26), insbesondere Rohre und/oder Panzerschläuche, einwandig im Innenbereich der Anschlusseinheit angeordnet sind, und der Innenbereich mit einem Zwischenraum (23c) der Doppelwandrohre (24) verbunden ist.

3. Wärmetauscher (1) gemäss einem der vorangehenden Ansprüche, wobei Verbindungsstücke oder Anschlussstücke (21, 22) vorliegen, welche jeweils eines oder mehrere Umlenkelemente (26) als Umlenkabschnitte aufweisen, wobei ein Umlenkelement (26) einem Leitungsabschnitt mit einer Umlenkung um 180° entspricht und die beiden Enden eines solchen Leitungsabschnitts jeweils an einen Rohrabschnitt (24) angeschlossen sind.

4. Wärmetauscher (1) gemäss Anspruch 3, wobei mindestens eines der Anschlussstücke (21, 22) eine Umhüllung (214) aus einem insbesondere elastischen Kunststoff aufweist, welche mindestens einen Teil des Anschlussstücks (21, 31) bedeckt und eine zweite Trennung zwischen frischwasserführenden Bereichen und abwasserführenden Bereichen des Wärmetauschers (1) bildet.

5. Wärmetauscher (1) gemäss Anspruch 4, wobei ein Bereich der Umhüllung (214) einen Dichtungsbereich zwischen dem Anschlussstück (21, 31) und einem in dieses eingesteckten Rohrabschnitt (24) bildet.

6. Wärmetauscher (1) gemäss einem der Ansprüche 4 bis 5, wobei in einem Zwischenbereich zwischen der Umhüllung und dem Anschlussstück ein Material eingebracht ist, welches bei Aufnahme von Wasser seine Farbe ändert und wobei die Umhüllung transparent oder semitransparent ist.

7. Wärmetauscher (1) gemäss einem der Ansprüche 1 bis 6, wobei
• in der Ablaufwanne (3) ein Einlaufbereich (E), ein Siphonbereich (S) und ein Ablaufbereich (A) angeordnet sind, die im Betrieb des Wärmetauschers (1) nacheinander und in dieser Reihenfolge von Abwasser durchströmt werden,
• der Einlaufbereich im Luftaustausch mit der Umgebung oberhalb des Wärmetauschers (1) steht,
• der Ablaufbereich im Luftaustausch mit einem Ablaufstutzen (36) steht, der zum Anschluss an eine Kanalisation vorgesehen ist,
• der Siphonbereich einen Luftaustausch zwischen Einlaufbereich und Ablaufbereich verhindert und den Durchfluss von Flüssigkeit vom Einlaufbereich zum Ablaufbereich zulässt,
• der Siphonbereich auf einer ersten Seite durch eine Wannenwand (34) und auf einer zweiten Seite durch ein Stauelement (4) begrenzt ist, und
• das Stauelement (4) ablaufendes Abwasser zurückhält, so dass es über ein Verteilelement (42) strömt, welches das Abwasser über die die mindestens eine Wärmetauschereinheit (2) verteilt.

8. Wärmetauscher (1) gemäss Anspruch 7, wobei
der Siphonbereich entlang einer horizontalen Richtung betrachtet an einer ersten Seite der Wärmetauschereinheit (2) angeordnet ist und der Ablaufbereich an einer zweiten, der ersten gegenüberliegenden Seite der Wärmetauschereinheit (2) angeordnet ist.

9. Wärmetauscher (1) gemäss einem der Ansprüche 7 bis 8, wobei
die Frischwasserzuführung (38) und eine Frischwasserabführung (39) der Wärmetauschereinheit (2) durch eine Wannenwand (34) an der zweiten Seite der Wärmetauschereinheit (2) geführt ist.

10. Wärmetauscher (1) gemäss einem der Ansprüche 7 bis 9, wobei
die Rohrabschnitte (24) der Wärmetauschereinheit (2) genau einen Satz von übereinander angeordneten Rohrabschnitten (24) bilden, die nacheinander von herabtropfendem oder herablaufendem Abwasser beträufelt oder überströmt werden.

11. Wärmetauscher (1) gemäss einem der Ansprüche 7 bis 10, wobei
der Siphonbereich durch eine zwischen Wannenboden (33) und Stauelement (4) angeordnete Dichtung (41) gegenüber dem Ablaufbereich abgedichtet ist.

12. Wärmetauscher (1) gemäss einem der Ansprüche 7 bis 11, wobei der Einlaufbereich durch eine zwischen Wannenwand (34) und einem Staudeckel (8) angeordnete Dichtung (41) gegenüber dem Ablaufbereich abgedichtet ist, wobei der Staudeckel (8) verhindert, dass Luft aus dem Ablaufbereich in den Einlaufbereich gelangt, und insbesondere die Dichtung (41) einstückig mit einer Dichtung gegenüber dem Wannenboden geformt ist.

13. Wärmetauscher (1) gemäss einem der bisherigen Ansprüche, wobei die Rohrabschnitte (24) senkrecht übereinander angeordnet sind.

14. Wärmetauscher (1) gemäss einem der bisherigen Ansprüche, wobei die Rohrabschnitte (24) im Wesentlichen gerade sind.

15. Wärmetauscher (1) gemäss einem der bisherigen Ansprüche, wobei
• die mindestens eine Wärmetauschereinheit (2) eine doppelte Trennung mit einem Zwischenraum zwischen Frischwasser und Abwasser aufweist, wobei der Zwischenraum sich vollständig innerhalb der Ablaufwanne (3) befindet.

16. Wärmetauscher (1) gemäss einem der bisherigen Ansprüche, wobei
• Anschlussstellen als bewegliche Verbindungen vorliegen, welche ein Herausschwenken oder Entfernen der mindestens einen Wärmetauschereinheit aus der Ablaufwanne erlauben.

17. Wärmetauscher (1) gemäss einem der vorangehenden Ansprüche, wobei die Wärmetauschereinheit (2) an einem ersten **Anschlussstück** (21) zur Zuführung von Frischwasser und einem zweiten **Anschlussstück** (22) zum Abführen von Frischwasser angeschlossen ist, die Ablaufwanne (3) einen ersten und einen zweiten Anschlussstutzen (31, 32) aufweist, die in die Ablaufwanne (3) hinein respektive aus dieser hinaus führen, und das erste Anschlussstück (21) am ersten Anschlussstutzen (31) sowie das zweite Anschlussstück (22) am zweiten Anschlussstutzen (32) lösbar montiert ist.

18. Wärmetauscher (1) gemäss einem der vorangehenden Ansprüche, aufweisend eine doppelwandige Trennung zwischen frischwasserführenden Bereichen und abwasserführenden Bereichen durch einen Zwischenraum, wobei die Rohrabschnitte (24) durch Doppelwandrohre gebildet sind, und wobei
• doppelwandige Anschlussstücke (21, 22) und optional auch doppelwandige Anschlussstutzen (31, 32) vorliegen, und ein Zwischenraum der Anschlussstücke (21, 22) mit einem Zwischenraum (23c) der Doppelwandrohre (24) verbunden ist,

## Claims

1. A heat exchanger (1) for heating fresh water by way of heat from waste water, at a shower or bath tub, comprising a drain trough (3), at least one heat exchanger unit (2) which is arranged in the drain trough (3) and is provided for the connection into a fresh water feed (38), and a distribution element (42) which is arranged for distributing running-off water over the at least one heat exchanger unit (2), wherein the at least one heat exchanger unit (2) comprises several sequentially successive pipe sections (24) which are connected to one another by deflection sections (25) and which run essentially horizontally, given an orientation of the heat exchanger as in operation of the heat exchanger, **characterised in that** in each case two horizontally running, successive pipe sections (24), thus ones which are connected to one another by a deflection section, are arranged above one another, and one after the other are subjected to being sprinkled or flowed over by dripping down or running down waste water.

2. A heat exchanger (1) according to claim 1, comprising a double-walled separation between regions leading fresh water and regions leading waste water, by way of an intermediate space, wherein the pipe sections (24) are formed by double-wall pipes, and wherein
• a **connection unit** (6; 21, 22) is present, wherein an inner region (61; 212) of the connection unit is separated from waste-water-leading regions in a fluid-tight manner, and conduits (62; 26) leading fresh water, in particular pipes and/or reinforced hoses, are arranged in the inner region of the connection unit in a single-walled manner, and the inner region is connected to an intermediate space (23c) of the double-wall pipes (24).

3. A heat exchanger according to one of the preceding claims, wherein connecting pieces or connection pieces (21, 22) are present, which each comprise one or more deflection elements (26) as deflection sections, wherein a deflection element (26) corresponds to a conduit section with a deflection by 180° and the two ends of such a conduit section are connected in each case to a pipe section (24).

4. A heat exchanger (1) according to claim 3, wherein at least one of the connection pieces (21, 22) comprises a sheath (214) of an, in particular elastic, plastic, which covers at least a part of the connection piece (21, 31) and forms a second separation between regions of the heat exchanger leading fresh water and regions of the heat exchanger leading waste water.

5. A heat exchanger (1) according to claim 4, wherein a region of the sheath (214) forms a sealing region between the connection piece (21, 31) and a pipe section (24) inserted into this connection piece.

6. A heat exchanger (1) according to one of the claims 4 to 5, wherein a material is incorporated in an intermediate region between the sheath and the connection piece, and this material changes its colour on absorbing water, and wherein the sheath is transparent or semitransparent.

7. A heat exchanger according to one of the claims 1 to 6, wherein
• a run-in region (**E**), a siphon region (**S**) and a run-off region (**A**) are arranged in the drain trough (3), through which regions waste water flows one after the other and in this sequence, on operation of the heat exchanger, wherein
• the run-in region is in air exchange with the surroundings above the heat exchanger (1),
• the run-off region is in air exchange with a run-off pipe-stub provided for connection to a sewage system, and
• the siphon region prevents air exchange between the run-in region and run-off region and permits the flow of fluid from the run-in region to the run-off region,
• the siphon region at a first side is delimited by a trough wall (34) and at a second side by a damming element (4),
• the damming element (4) holds back running-off waste water, so that it flows over a distribution element (4) which distributes the waste water over the at least one heat exchanger unit.

8. A heat exchanger (1) according to claim 7, wherein the siphon region considered along a horizontal direction is arranged at a first side of the heat exchanger unit (2), and the run-off region is arranged at a second side of the heat exchanger unit (2) which is opposite to the first side.

9. A heat exchanger (1) according to one of the claims 7 to 8, wherein the fresh water feed (38) and a fresh water discharge (39) of the heat exchanger unit (2) are led through a trough wall (34) at the second side of the heat exchanger unit (2).

10. A heat exchanger unit (1) according to one of the claims 7 to 9, wherein the pipe sections (24) of the heat exchanger unit (2) form precisely one set of pipe sections (24) which are arranged above one another and over which dripping-down or running-down waste water trickles or flows one after the other.

11. A heat exchanger unit (1) according to one of the claims 7 to 10, wherein the siphon region is sealed with respect to the run-off region by way of a seal (41) which is arranged between the trough base (33) and the damming element (4).

12. A heat exchanger unit (1) according to one of the claims 7 to 11, wherein the run-in region is sealed with respect to the run-off region by a seal (41) which is arranged between the trough wall (34) and a damming cover (8), wherein the damming cover (8) prevents air from getting from the run-off region into the run-in region, and in particular the seal (41) is formed as one piece with a seal for sealing with respect to the trough base.

13. A heat exchanger (19 according to one of the preceding claims, wherein the pipe sections (24) are arranged vertically above one another.

14. A heat exchanger according to one of the preceding claims, wherein the pipe sections (24) are essentially straight.

15. A heat exchanger according to one of the preceding claims, wherein
• the at least one heat exchanger unit (2) comprises a double separation with an intermediate space between the fresh water and waste water, wherein the intermediate space is located completely within the drain trough (3).

16. A heat exchanger (1) according to one of the preceding claims, wherein
• connection locations are present as movable connections which permit a pivoting-out or removal of the at least one heat exchanger unit from the drain trough.

17. A heat exchanger (1) according to one of the preceding claims, wherein the heat exchanger unit (2) is connected to a first **connection piece** (21) for feeding fresh water and to a second **connection piece (22)** for the discharge of fresh water, and the drain trough (3) comprises a first and a second connection pipe-stub (31, 32) which respectively lead into and out of the drain trough (3), and the first connection piece (21) is releasably assembled on the first connection pipe-stub (31), and the second connection piece (22) is releasably assembled on the section connection pipe-stub (32).

18. A heat exchanger (1) according to one of the preceding claims, comprising a double-walled separation between regions leading fresh water and regions leading waste water, by way of an intermediate space, wherein the pipe sections (24) are formed by double-wall pipes, and wherein
• double-walled connection pieces (21, 22) and optionally also double-walled connection pipe-stubs (31, 32) are present, and an intermediate space of the connection pieces (21, 22) is connected to an intermediate space (23c) of the double-wall pipes (24).

## Revendications

1. Echangeur de chaleur (1) destiné à chauffer de l'eau fraîche au moyen de la chaleur de l'eau usée d'une douche ou d'une baignoire, présentant
une cuve d'évacuation (3),
au moins une unité (2) d'échange de chaleur disposée dans la cuve d'évacuation (3) et prévue pour être raccordée à une amenée (38) d'eau fraîche,
un élément de répartition (42) disposé au-dessus de la ou des unités (2) d'échange de chaleur pour répartir l'eau usée évacuée,
la ou les unités (2) d'échange de chaleur présentant plusieurs sections de tube (24) successives reliées les unes aux autres par des sections de renvoi (25) et s'étendant essentiellement à l'horizontale lorsque l'échangeur de chaleur est orienté comme un échangeur de chaleur en service,
**caractérisé en ce que**
deux sections de tube (24) s'étendant à l'horizontale, successives et également reliées l'une à l'autre par une section de renvoi sont disposées l'une au-dessus de l'autre et sont aspergées et/ou léchées successivement par l'eau usée qui s'égoutte ou qui s'évacue.

2. Echangeur de chaleur (1) selon la revendication 1, présentant une séparation en double paroi entre les parties conduisant l'eau froide et les parties conduisant l'eau usée dans un espace intermédiaire, les sections de tube (24) étant formées de tubes à double paroi et une unité de raccordement (6; 21, 22) étant prévue, une partie intérieure (61; 212) de l'unité de raccordement étant séparée de manière étanche aux liquides des parties conduisant l'eau usée, des conduits (62; 26) conduisant l'eau fraîche, en particulier des tubes et/ou des tuyaux flexibles renforcés, à paroi simple, étant disposés dans la partie intérieure de l'unité de raccordement, la partie intérieure étant reliée à un espace intermédiaire (23c) des tubes (24) à double paroi.

3. Echangeur de chaleur (1) selon l'une des revendications précédentes, dans lequel des pièces de liaison ou des pièces de raccordement (21, 22) sont prévues et présentent chacune un ou plusieurs éléments de renvoi (26) servant de sections de renvoi, un élément de renvoi (26) correspondant à une section de conduit présentant un renvoi de 180° et chacune des deux extrémités d'une telle section de conduit étant raccordée à une section de tube (24).

4. Echangeur de chaleur (1) selon la revendication 3, dans lequel au moins l'une des pièces de raccordement (21, 22) présente une enveloppe (214) en matière synthétique en particulier élastique qui recouvre au moins une partie de la pièce de raccordement (21, 31) et qui forme une deuxième séparation entre les parties conduisant l'eau fraîche et les parties conduisant l'eau usée de l'échangeur de chaleur (1).

5. Echangeur de chaleur (1) selon la revendication 4, dans lequel une partie de l'enveloppe (214) forme une partie d'étanchéité entre la pièce de raccordement (21, 31) et une section de tube (24) qui y est enfichée.

6. Echangeur de chaleur (1) selon l'une des revendications 4 et 5, dans lequel un matériau qui dont la couleur se modifie lorsqu'il absorbe de l'eau, l'enveloppe étant transparente ou semi-transparente, est placé dans une partie intermédiaire située entre l'enveloppe et la pièce de raccordement.

7. Echangeur de chaleur (1) selon l'une des revendications 1 à 6, dans lequel
une partie d'entrée (E), une partie formant siphon (S) et une partie d'évacuation (A) traversées successivement et dans cet ordre par l'eau usée lorsque l'échangeur de chaleur (1) est en fonctionnement sont disposées dans la cuve d'évacuation (3),
la partie d'entrée échange de l'air avec l'environnement au-dessus de l'échangeur de chaleur (1),
la partie d'évacuation échange de l'air avec une tubulure d'évacuation (36) prévue pour le raccordement à une canalisation,
la partie formant siphon empêche un échange d'air entre la partie d'entrée et la partie d'évacuation et permet le passage de liquide de la partie d'entrée à la partie d'évacuation,
la partie formant siphon est délimitée sur un premier côté par une paroi (34) de la cuve et sur une deuxième côté par un élément de retenue (4) et
l'élément de retenue (4) retient l'évacuation de l'eau usée de telle sorte qu'elle s'écoule par un élément de répartition qui répartit l'eau usée au-dessus de la ou des unités (2) d'échange de chaleur.

8. Echangeur de chaleur (1) selon la revendication 7, dans lequel la partie formant siphon est disposée sur un premier côté de l'unité (2) d'échange de chaleur dans la direction horizontale et la partie d'évacuation est disposée sur un deuxième côté, opposé au premier, de l'unité (2) d'échange de chaleur.

9. Echangeur de chaleur (1) selon l'une des revendications 7 et 8, dans lequel l'amenée (38) d'eau fraîche et une évacuation (39) d'eau fraîche de l'unité (2) d'échange de chaleur sont guidées par une paroi (34) de la cuve sur le deuxième côté de l'unité (2) d'échange de chaleur.

10. Echangeur de chaleur (1) selon l'une des revendications 7 à 9, dans lequel les sections de tube (24) de l'unité (2) d'échange de chaleur forment exactement un jeu de sections de tube (24) disposées les unes au-dessus des autres et qui sont aspergées ou léchées successivement par l'eau usée qui s'égoutte ou qui s'évacue.

11. Echangeur de chaleur (1) selon l'une des revendications 7 à 10, dans lequel la partie formant siphon est rendue étanche vis-à-vis de la partie d'évacuation par un joint d'étanchéité (41) disposé entre le fond (33) de la cuve et l'élément de retenue (4).

12. Echangeur de chaleur (1) selon l'une des revendications 7 à 11, dans lequel la partie d'entrée est rendue étanche par rapport à la partie d'évacuation par un joint d'étanchéité (41) disposé entre la paroi (34) de la cuve et un couvercle de retenue (8), le couvercle de retenue (8) empêchant que de l'air passe de la partie d'évacuation à la partie d'entrée, le joint d'étanchéité (41) étant formé en particulier d'une seule pièce avec un joint d'étanchéité par rapport au fond de la cuve.

13. Echangeur de chaleur (1) selon l'une des revendications précédentes, dans lequel les sections de tube (24) sont disposées verticalement les unes au-dessus des autres.

14. Echangeur de chaleur (1) selon l'une des revendications précédentes, dans lequel les sections de tube (24) sont essentiellement rectilignes.

15. Echangeur de chaleur (1) selon l'une des revendications précédentes, dans lequel la ou les unités (2) d'échange de chaleur présentent entre l'eau fraîche et l'eau usée une double séparation avec espace intermédiaire, l'espace intermédiaire étant situé entièrement à l'intérieur de la cuve d'évacuation (3).

16. Echangeur de chaleur (1) selon l'une des revendications précédentes, dans lequel des emplacements de raccordement réalisés sous la forme de liaisons mobiles sont prévus pour permettre de sortir la ou les unités d'échange de chaleur hors de la cuve d'évacuation par pivotement ou translation.

17. Echangeur de chaleur (1) selon l'une des revendications précédentes, dans lequel l'unité (2) d'échange de chaleur est raccordée à une première pièce de raccordement (21) permettant l'amenée d'eau fraîche et à une deuxième pièce de raccordement (22) permettant l'évacuation d'eau fraîche, la cuve d'évacuation (3) présentant une première et une deuxième tubulure de raccordement (31, 32) qui conduisent respectivement dans la cuve d'évacuation (3) et hors de celle-ci, la première pièce de raccordement (21) étant montée de manière libérable sur la première tubulure de raccordement (31) et la deuxième pièce de raccordement (22) étant montée de manière libérable sur la deuxième tubulure de raccordement (32).

18. Echangeur de chaleur (1) selon l'une des revendications précédentes, présentant une séparation à double paroi entre les parties conduisant l'eau fraîche et les parties conduisant l'eau usée par un espace intermédiaire, les sections de tube (24) étant formées par des tubes à double paroi et des pièces de raccordement (21, 22) à double paroi et facultativement aussi des tubulures de raccordement (31, 32) à double paroi sont prévues, un espace intermédiaire des pièces de raccordement (21, 22) étant relié à un espace intermédiaire (23c) des tubes (24) à double paroi,
